# EUROPEAN PATENT APPLICATION

(11) **EP 4 835 013 A1**
(43) Date of publication of application: **04.11.2026**
(21) Application number: 24912364.7
(22) Date of filing: 11.12.2024
(51) Int. Cl.: C09D 1/00, B05D 7/24, B32B 9/00, C08G 65/336, C09D 5/00, C09D 7/61, C09D 171/00, C09K 3/18

(54) **AQUEOUS PRIMER COMPOSITION, WATER-REPELLENT ARTICLE, AND METHOD FOR PRODUCING WATER-REPELLENT ARTICLE**

(30) Priority: 28.12.2023 JP 2023222056
(71) Applicant: SHIN-ETSU CHEMICAL CO., LTD., Tokyo 100-0005 (JP)
(72) Inventor: UCHIDA Takashi, Annaka-shi, Gunma 379-0224 (JP)
(74) Representative: Ter Meer und Partner mbB
(86) International application number: PCT/JP2024/043727
(87) International publication number: WO 2025/142475

(57) **Abstract**

Provided is an aqueous primer composition which is used for forming a primer layer of a water-repellent article, which has the primer layer on the outer surface of a base material and also has a water-repellent surface layer on the outer surface of the primer layer. The aqueous primer composition is characterized by containing silica nanoparticles and a metal compound containing one or more of niobium, hafnium, zirconium and tantalum at quantities whereby the mass ratio of the metal compound relative to the silica nanoparticles is not less than 5% and less than 1000%. By forming the primer layer on the surface of the base material using the aqueous primer composition, it is possible to produce a water-repellent article having a water-repellent surface layer that exhibits excellent abrasion resistance and excellent chemical resistance.

## Description

### TECHNICAL FIELD

This invention relates to an aqueous primer composition. Specifically, the invention relates to an aqueous primer composition to be used for formation of a primer layer of a water-repellent article including the primer layer on the outer surface of a substrate and including a water-repellent surface layer on the outer surface of the primer layer, and relates to a water-repellent article including a primer layer formed using the aqueous primer composition and including a water-repellent surface protective film excellent in abrasion durability and chemical resistance, and relates to a method of producing the water-repellent article.

### BACKGROUND ART

Regarding members for semiconductor manufacturing processes, mold members, members for precision equipment, parts for medical equipment, automobile parts, building materials, home appliances, OA equipment, and household goods, these articles generally have a water-repellent treated surface for protection of the articles.

For the water repellent treatment, an alkyl group-containing silane compound (see Patent Documents 1 and 2: JP-A 2002-038092 and JP-A 2021-123678) or a fluoropolyether group-containing silane compound (see Patent Documents 3 to 8: JP 6260579, JP 6828744, JP 5761305, JP 6451279, JP 6741074, and JP 6617853) is used. If a silane compound described above is applied to and cured on a surface of a substrate of a metal, porcelain, glass, plastic, or the like, a water-repellent layer is formed on the surface of the substrate, and an ability to prevent dust staining, fingerprint staining, and other staining can be imparted to the substrate.

The silane compound has an organic functional group and a reactive silyl group (generally, a hydrolyzable silyl group such as an alkoxysilyl group) in one molecule. The hydrolyzable silyl group causes a self-condensation reaction by moisture in the air, or the like, to form a coating film. In the coating film, the hydrolyzable silyl group is chemically and physically bonded to the substrate surface, and thus the coating film becomes a strong coating film having durability.

Furthermore, it is disclosed that the abrasion durability can be improved by providing a silicon oxide layer between the silane compound and a substrate (see Patent Documents 9 to 17: WO 2014/097388, JP-A 2020-132498, JP-A 2020-090652, JP 5655215, JP 6601492, JP 5494656, WO 2019/035271, WO 2023/013476, and WO 2023/013477).

However, even when a primer layer of the silane compound and silicon oxide is used in combination, good chemical resistance is sometimes not obtained in addition to the good abrasion durability.

Conventional techniques related to the invention include techniques described in the following documents in addition to the techniques described in the above documents.

### PRIOR ART DOCUMENTS

### PATENT DOCUMENTS

Patent Document 1: JP-A 2002-038092
Patent Document 2: JP-A 2021-123678
Patent Document 3: JP 6260579
Patent Document 4: JP 6828744
Patent Document 5: JP 5761305
Patent Document 6: JP 6451279
Patent Document 7: JP 6741074
Patent Document 8: JP 6617853
Patent Document 9: WO 2014/097388
Patent Document 10: JP-A 2020-132498
Patent Document 11: JP-A 2020-090652
Patent Document 12: JP 5655215
Patent Document 13: JP 6601492
Patent Document 14: JP 5494656
Patent Document 15: WO 2019/035271
Patent Document 16: WO 2023/013476
Patent Document 17: WO 2023/013477
Patent Document 18: JP-A 2008-534696
Patent Document 19: JP-A 2008-537557
Patent Document 20: JP-A 2012-072272
Patent Document 21: JP-A 2012-157856
Patent Document 22: JP-A 2013-136833
Patent Document 23: JP-A H9-326240
Patent Document 24: JP 4363388
Patent Document 25: JP-A 2022-118099

### SUMMARY OF INVENTION

### TECHNICAL PROBLEM

An object of the invention, which has been made under the above-mentioned circumstances, is to provide an aqueous primer composition to be used for formation of a primer layer of a water-repellent article including the primer layer on the outer surface of a substrate and including a water-repellent surface layer on the outer surface of the primer layer, a water-repellent article including a primer layer formed using the aqueous primer composition and including a water-repellent surface protective film excellent in abrasion durability and chemical resistance, and a method of producing the water-repellent article.

### SOLUTION TO PROBLEM

Making extensive investigations to attain the above object, the inventor found that, in a water-repellent article including a primer layer on an outer surface of a substrate and further including a water-repellent surface layer on an outer surface of the primer layer, it is possible to form a water-repellent surface protective film having excellent chemical resistance and good abrasion durability in the case of forming the primer layer using an aqueous primer composition containing silica nano-particles and a metal compound containing at least one of niobium, hafnium, zirconium, and tantalum so that the metal compound is present at a weight percent of 5% or more and less than 1000% relative to the silica nano-particles, and thus the invention has been completed.

Accordingly, the invention provides an aqueous primer composition, a water-repellent article, and a method of producing the water-repellent article as defined below.
[1] An aqueous primer composition to be used for forming a primer layer of a water-repellent article, the water-repellent article including the primer layer on an outer surface of a substrate and further including a water-repellent surface layer on an outer surface of the primer layer, the aqueous primer composition comprising silica nano-particles and a metal compound containing at least one of niobium, hafnium, zirconium, and tantalum, wherein the metal compound is present at a weight percent of 5% or more and less than 1000% relative to the silica nano-particles.
[2] The aqueous primer composition of [1], wherein the silica nano-particles have an average particle size of 0.1 to 50 nm.
[3] The aqueous primer composition of [1] or [2], wherein the metal compound is at least one of niobium oxide, niobium ammonium oxalate, and niobium oxalate.
[4] The aqueous primer composition of [3], wherein the niobium oxide consists of niobium oxide nano-particles having an average particle size of 0.1 to 20 nm.
[5] The aqueous primer composition of any one of [1] to [4], wherein the metal compound is at least one of zirconium ammonium carbonate, zirconium acetate, zirconium oxynitrate, zirconium nitrate, zirconium oxychloride, and chlorohydroxyzirconium.
[6] The aqueous primer composition of any one of [1] to [5], wherein the substrate is of metal.
[7] The aqueous primer composition of any one of [1] to [5], wherein the substrate is of glass.
[8] The aqueous primer composition of any one of [1] to [7], which is used for a building material or housing equipment.
[9] The aqueous primer composition of any one of [1] to [7], which is used for a touch panel, a window, or a lens.
[10] A water-repellent article comprising:
   a substrate;
   a primer layer on an outer surface of the substrate, the primer layer containing 50 wt% or more of a total of silica nano-particles and a metal oxide containing at least one of niobium, hafnium, zirconium, and tantalum, the metal oxide present at a weight percent of 5% or more and less than 1000% relative to the silica nano-particles, the primer layer having a film thickness of 1 to 50 nm; and
   a water-repellent surface layer on an outer surface of the primer layer, the water-repellent surface layer having a film thickness of 0.5 to 20 nm.
[11] The water-repellent article of [10], wherein the silica nano-particles in the primer layer have an average particle size of 0.1 to 50 nm.
[12] The water-repellent article of [10] or [11], wherein the metal oxide in the primer layer is niobium oxide or zirconium oxide.
[13] The water-repellent article of any one of [10] to [12], wherein the water-repellent surface layer is a cured product of a surface treating agent containing at least one fluoropolyether group-containing polymer having a silanol group or a hydrolyzable silyl group and/or a partial (hydrolytic) condensate thereof, the at least one fluoropolyether group-containing polymer having the following formula (1), (4), or (7):

   [Chem. 1] A¹-Rf-D (1)

   wherein Rf is a divalent perfluoropolyether group, A¹ is a monovalent fluorinated hydrocarbon group which is terminated with CF₃- or CF₂H- and may contain oxygen or A¹ is D, D is independently a monovalent group having the following formula (2):

      [Chem. 2] -Q-Z(W)_{α} (2)
   wherein Q is a single bond or a divalent organic group, Z is a tri to octa-valent group, α is an integer of 2 to 7, W is independently a monovalent silanol group or hydrolyzable silyl group-containing group having the following formula (3): 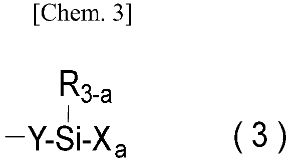
   wherein R is a C₁-C₄ alkyl group or a phenyl group, X is independently a hydroxyl group or a hydrolyzable group, a is 2 or 3, Y is a single bond or a divalent hydrocarbon group which may contain at least one moiety selected from fluorine, silicon, and a siloxane bond,

      [Chem. 4] A²-Rf-G (4)
   wherein Rf is as defined above, A² is a monovalent fluorinated hydrocarbon group which is terminated with CF₃- or CF₂H- and may contain oxygen, or G, G is independently a monovalent group having the following formula (5): 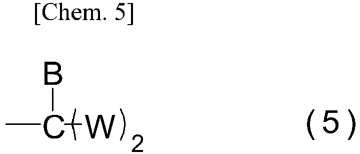
   wherein W is as defined above, B is hydrogen or -OS, S is hydrogen, a C₁-C₁₀ monovalent hydrocarbon group, or a monovalent group having the following formula (6): 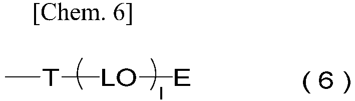
   wherein T is a single bond or a divalent group, L is independently a C₁-C₄ divalent hydrocarbon group, E is a C₁-C₆ monovalent hydrocarbon group or W, 1 is an integer of 0 to 20,

      [Chem. 7] A³-Rf-J (7)
   wherein Rf is as defined above, A³ is a monovalent fluorinated hydrocarbon group which is terminated with CF₃- or CF₂H- and may contain oxygen, or J, J is independently a monovalent group having the following formula (8): 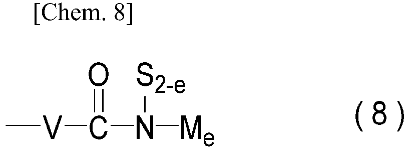
   wherein S is as defined above, V is a single bond or a C₂-C₁₅ divalent hydrocarbon group which may contain an ether bond, M is independently a monovalent group having the following formula (9): 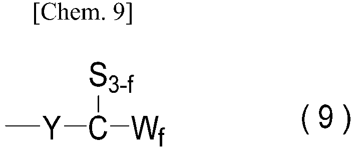
   wherein Y, S, and W are as defined above, and f is an integer of 1 to 3,
      e is 1 or 2, J containing at least two W.
[14] The water-repellent article of any one of [10] to [12], wherein the water-repellent surface layer is a cured product of a surface treating agent containing an alkyl group-containing compound having a hydrolyzable silyl group and being free of fluorine and/or a partial hydrolytic condensate thereof, the alkyl group-containing compound having the following formula (11), (12), or (13): 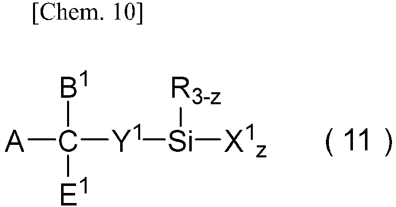
   wherein A is a C₁-C₅₀ monovalent hydrocarbon group, B¹ is hydrogen or a hydroxyl group, E¹ is hydrogen or a C₁-C₅₀ monovalent hydrocarbon group, A and E¹ contain 12 or more carbon atoms in total, Y¹ is a single bond or a divalent hydrocarbon group which may contain at least one moiety selected from silicon and a siloxane bond, R is a C₁-C₄ alkyl group or a phenyl group, X¹ is independently a hydrolyzable group, and z is 2 or 3, 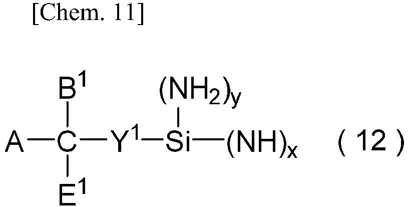
   wherein A, B¹, E¹, Y¹ are as defined above, y is a number of 0 to 3, x represents (3 - y)/2, the formula (12) is a molecular formula of a monomer in a case where y is 3, the formula (12) is a composition formula of a polymer in a case where y is less than 3, 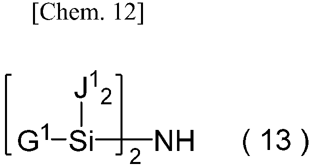
   wherein G¹ is independently a C₈-C₃₀ monovalent hydrocarbon group, and J¹ is independently hydrogen, a hydroxyl group, or a methyl group.
[15] The water-repellent article of any one of [10] to [14], wherein the substrate is of metal.
[16] The water-repellent article of any one of [10] to [14], wherein the substrate is of glass.
[17] The water-repellent article of any one of [10] to [16], which is used for a building material or housing equipment.
[18] The water-repellent article of any one of [10] to [16], which is used for a touch panel, a window, or a lens.
[19] A method of producing the water-repellent article of any one of [10] to [18], the method comprising:
   forming a primer layer by a wet coating method using the aqueous primer composition of any one of [1] to [9]; and
   forming a water-repellent surface layer by a wet coating method.
[20] A method of producing the water-repellent article of any one of [10] to [18], the method comprising:
   forming a primer layer by a wet coating method using the aqueous primer composition of any one of [1] to [9]; and
   forming a water-repellent surface layer by a dry coating method.

### ADVANTAGEOUS EFFECTS OF INVENTION

According to the aqueous primer composition of the invention, a water-repellent article having a water-repellent surface layer excellent in abrasion durability and chemical resistance can be produced by forming a primer layer on a substrate surface using the aqueous primer composition and thus making a water-repellent surface layer (such as a cured product of a reactive silyl compound exhibiting surface water repellency) adhere to the substrate surface firmly. In a method of producing the water-repellent article, formation can be performed by a wet process without requiring a vacuum process or a high-temperature heating process, and the method can be applied to various applications.

### DESCRIPTION OF EMBODIMENTS

In the invention, the term "partial (hydrolytic) condensate" refers to a partial condensate or a partial hydrolytic condensate.

Hereinafter, the invention is described in more detail.

### [Aqueous primer composition]

The invention provides an aqueous primer composition to be used for forming a primer layer of a water-repellent article, and the water-repellent article includes the primer layer on an outer surface of a substrate and further includes a water-repellent surface layer on an outer surface of the primer layer. The aqueous primer composition comprises silica nano-particles and a metal compound containing at least one of niobium, hafnium, zirconium, and tantalum, and the metal compound is present at a weight percent of 5% or more and less than 1000% relative to the silica nano-particles.

In the aqueous primer composition of the invention, the silica nano-particles preferably have an average particle size (diameter) of 50 nm or less, more preferably 20 nm or less, and still more preferably 10 nm or less. If the silica nano-particles have an excessively large average particle size, the number of contact points between the substrate and the silica nano-particles is small, and thus the adhesion to the substrate may deteriorate. The lower limit of the average particle size is typically to be 0.1 nm or more, and is preferably to be about 0.5 nm or more. If the silica nano-particles have an excessively small average particle size, the primer layer may have a low mechanical strength. In the invention, the average particle size can be determined, for example, as a hydrodynamic average diameter by a dynamic light scattering method in accordance with JIS Z 8828: 2019.

As the silica nano-particles used in the invention, a commercially available product can be used that is in a state of being dispersed in water. Examples of the commercially available product include SNOWTEX (manufactured by Nissan Chemical Corporation).

The content of the silica nano-particles is preferably 0.01 to 10 wt%, and more preferably 0.1 to 1 wt% in the aqueous primer composition. If the content of the silica nano-particles is excessively small, uncoated parts increase, and if the content of the silica nano-particles is excessively large, aggregation (phase separation) may occur.

In the aqueous primer composition of the invention, examples of the metal compound containing at least one of niobium, hafnium, zirconium, and tantalum include metal compounds containing niobium, metal compounds containing hafnium, metal compounds containing zirconium, and metal compounds containing tantalum.

Examples of the metal compound containing niobium include niobium oxide, niobium ammonium oxalate, niobium oxalate, and the like.

Here, the niobium oxide preferably consists of niobium oxide nano-particles, and the niobium oxide nano-particles preferably have an average particle size (diameter) of 20 nm or less, and more preferably 10 nm or less. If the niobium oxide nano-particles have an excessively large average particle size, the number of contact points between the substrate and the niobium oxide nano-particles is small, and thus the adhesion to the substrate may deteriorate. The lower limit of the average particle size typically needs to be 0.1 nm or more, and preferably needs to be about 0.5 nm or more. If the niobium oxide nano-particles have an excessively small average particle size, the primer layer may have a low mechanical strength. In the invention, the average particle size can be determined, for example, as a hydrodynamic average diameter by a dynamic light scattering method in accordance with JIS Z 8828: 2019.

Examples of the metal compound containing hafnium include hafnium acetate, hafnium oxalate, and the like.

Examples of the metal compound containing zirconium include zirconium ammonium carbonate, zirconium acetate, zirconium oxynitrate, zirconium nitrate, zirconium oxychloride, chlorohydroxyzirconium, and the like.

Examples of the metal compound containing tantalum include tantalum oxalate.

In the aqueous primer composition of the invention, the metal compound containing at least one of niobium, hafnium, zirconium, and tantalum is preferably a metal compound containing niobium or a metal compound containing zirconium, and more preferably niobium oxide nano-particles or zirconium ammonium carbonate. As the niobium oxide nano-particles and the zirconium ammonium carbonate used in the invention, a commercially available product can be used that is in a state of being dispersed in water or in a state of being an aqueous solution. Examples of the commercially available product of the niobium oxide nano-particles in a state of being dispersed in water include BIRAL Nb (manufactured by Taki Chemical Co., Ltd.), and examples of the commercially available product of the zirconium ammonium carbonate in a state of being an aqueous solution include Bacote (manufactured by Nippon Light Metal Company, Ltd.).

The content of the metal compound is preferably 0.01 to 10 wt%, and more preferably 0.1 to 1 wt% in the aqueous primer composition. If the content of the metal compound is excessively small, uncoated parts increase, and if the content of the metal compound is excessively large, aggregation (phase separation) may occur.

The content of the metal compound is determined, in the case of niobium oxide, from the particle weight, and the content of the metal compound other than niobium oxide is determined in terms of the metal oxide by a chelate titration method.

In the aqueous primer composition of the invention, the weight percent of the metal compound relative to the silica nano-particles in the primer composition is 5% or more and less than 1000%, and preferably 100% or more and 800% or less. If the weight percent of the metal compound is excessively low, the chemical resistance of the resulting water-repellent article cannot be obtained, and if the weight percent of the metal compound is excessively high, the abrasion durability of the resulting water-repellent article cannot be obtained.

In the aqueous primer composition of the invention, the solvent used for dispersing or dissolving the silica nano-particles and the metal compound is an aqueous solvent, and is preferably pure water or an alkaline aqueous solution such as a sodium hydroxide aqueous solution or an ammonia aqueous solution. The pH is preferably in a range of 7 or more and 11 or less, and more preferably 8 or more and 10 or less.

In the aqueous primer composition of the invention, the total content of the silica nano-particles and the metal compound is 50 to 100 wt%, and preferably 60 to 100 wt% in the solid content of the aqueous primer composition. If the total content is less than 50 wt%, the abrasion durability and the chemical resistance of the resulting water-repellent article deteriorate. The total content of the silica nano-particles and the metal compound may be 100 wt%, but in some such cases, a void is easily formed, and therefore the packing density may be increased by mixing other particles having a small particle size.

In the aqueous primer composition of the invention, particles other than the silica nano-particles and the metal compound may be mixed. Examples of the particles other than the silica nano-particles and the metal compound include nano-particles of titanium oxide, tin oxide, silver, platinum, copper, alumina, calcium oxide, magnesium oxide, manganese oxide, nickel oxide, and multicomponent oxides (excluding the aforementioned metal compound) having an average particle size of preferably 30 nm or less, more preferably 20 nm or less, and still more preferably 1 to 10 nm. Among them, titanium oxide nano-particles, platinum nano-particles, and tin oxide nano-particles are preferable. These may be used singly or in combination of two or more kinds thereof. In the case of using these particles, the content in the solid content of the aqueous primer composition is preferably 0.1 to 50 wt%, and more preferably 1 to 20 wt%.

In the aqueous primer composition of the invention, surfactants and related agents such as an ultraviolet absorber, a light stabilizer, an antioxidant, a leveling agent, an antifoaming agent, a pigment, a dye, a dispersant, an antistatic agent, and an antifogging agent may be used as necessary as long as an object of the invention is not impaired.

The aqueous primer composition of the invention can be prepared by a preparation method in which silica nano-particles, a metal compound containing at least one of niobium, hafnium, zirconium, and tantalum, an aqueous solvent, and, as necessary, another component are mixed to form a dispersion.

### [Water-repellent article]

The invention further provides a water-repellent article comprising a substrate, a primer layer on an outer surface of the substrate, and a water-repellent surface layer on an outer surface of the primer layer. The primer layer contains 50 wt% or more of a total of silica nano-particles and a metal oxide containing at least one of niobium, hafnium, zirconium, and tantalum, and the metal oxide is present at a weight percent of 5% or more and less than 1000% relative to the silica nano-particles. The primer layer has a film thickness of 1 to 50 nm, and the water-repellent surface layer has a film thickness of 0.5 to 20 nm.

The water-repellent article of the invention is obtained by, for example, a production method in which an aqueous primer composition containing the silica nano-particles and a metal compound containing at least one of niobium, hafnium, zirconium, and tantalum so that the metal compound is present at a weight percent of 5% or more and less than 1000% relative to the silica nano-particles is applied onto an outer surface of a substrate by wet coating, then the solvent is removed from the composition by drying to form a primer layer on the outer surface of the substrate, a surface treating agent containing a reactive silyl compound is further applied onto an outer surface of the primer layer by wet or dry coating, then the solvent is removed from the surface treating agent by drying, and the reactive silyl compound is cured to form a water-repellent surface layer on the outer surface of the primer layer.

### [Substrate]

Examples of the substrate material used in the water-repellent article of the invention include glass and metals.

Examples of the glass include soda-lime glass, crown glass, lead glass, borosilicate glass, crystallized glass, quartz glass, aluminosilicate glass, Tempax, Pyrex (registered trademark), and Neoceram, but are not limited thereto. The glass may have been treated by chemical strengthening or physical strengthening. The glass substrate may have a plate shape, a film shape, or another shape.

Examples of the metal include pure metals such as aluminum, titanium, chromium, iron, cobalt, zinc, nickel, and copper, alloys such as stainless steel (for example, SUS304 mirror finish), brass, kovar, and inconel, and metals plated with zinc, nickel, chromium, and the like, but are not limited thereto.

The metal substrate may have a plate shape, a rod shape, a spherical shape, or another shape.

The substrate may be pretreated before the primer layer is applied.

The method of the pretreatment is not particularly limited as long as a contaminant on the substrate surface can be removed and the substrate surface can be hydrophilized. Examples of the pretreatment include alcohol washing treatment with alcohols such as ethanol and 2-propanol, alkaline cleaning treatment with alkaline cleaning agents, plasma cleaning treatment with oxygen or argon plasma, and radical cleaning treatment with OH radicals. These treatments may be used in combination. The alkaline cleaning treatment with alkaline cleaning agents and the plasma cleaning treatment with plasma are preferable. More preferably, the alkaline cleaning treatment with an alkaline cleaning agent is followed by the plasma cleaning treatment with plasma.

The effect of the pretreatment of the substrate is ascertained by the degree of hydrophilicity on the substrate surface. The hydrophilicity can be evaluated in terms of a contact angle with water on the substrate. The contact angle is preferably 40° or less, more preferably 20° or less, and still more preferably 10° or less. The contact angle with water is measured in accordance with JIS R 3257:1999.

In the invention, a functional layer may be formed between the substrate and the primer layer. Examples of the functional layer include an antireflective film layer.

### [Primer layer]

The primer layer included in the water-repellent article of the invention contains 50 wt% or more of a total of silica nano-particles and a metal oxide containing at least one of niobium, hafnium, zirconium, and tantalum. The metal oxide is present at a weight percent of 5% or more and less than 1000% relative to the silica nano-particles, and the primer layer has a film thickness of 1 to 50 nm. The primer layer can be formed using the aqueous primer composition of the invention.

The primer layer can be formed by applying the aqueous primer composition to a substrate surface by a wet coating method, especially, a method such as a dipping method, brush coating, a spin coating method, spray coating, or flow coating, and drying the solvent. In order to increase the density of the primer layer, it is sufficient to heat the primer layer at 50 to 500°C for 10 minutes to 24 hours in a temperature range without an influence on the substrate. In a case where the metal compound is not a metal oxide, the metal compound is oxidized to be a metal oxide at this stage.

The film thickness of the primer layer formed on the substrate surface is appropriately selected according to the kind of the substrate, and is typically 1 to 50 nm, preferably 1 to 20 nm, and more preferably 1 to 10 nm. If the film thickness is below this range, the surface coating may be insufficient, leading to insufficient adhesion of the water-repellent surface layer. If the film thickness is above this range, an appearance defect such as a haze or a color change may occur. In the invention, the film thickness can be measured by X-ray reflectometry, spectroscopic ellipsometry, or the like.

The resulting primer layer is a metal oxide-silica mixture primer layer, and contains 50 wt% or more (50 to 100 wt%), preferably 60 to 100 wt% of a total of silica nano-particles and a metal oxide containing at least one of niobium, hafnium, zirconium, and tantalum. If the total content is less than 50 wt%, the abrasion durability and the chemical resistance of the resulting water-repellent article deteriorate.

In the resulting primer layer, the metal oxide is present at a weight percent of 5% or more and less than 1000%, and preferably 100% or more and 800% or less relative to the silica nano-particles. If the weight percent of the metal oxide is excessively low, the chemical resistance of the resulting water-repellent article cannot be obtained, and if the weight percent of the metal oxide is excessively high, the abrasion durability of the resulting water-repellent article cannot be obtained.

### [Water-repellent surface layer]

The water-repellent surface layer included in the water-repellent article of the invention is formed on an outer surface of the primer layer and has a film thickness of 0.5 to 20 nm, and the water-repellent surface layer is preferably formed of a cured product of a surface treating agent containing a reactive silyl compound exhibiting surface water repellency, and more preferably formed of a cured product of a surface treating agent containing a fluoropolyether group-containing polymer having a silanol group or a hydrolyzable silyl group and/or a partial (hydrolytic) condensate thereof, or a cured product of a surface treating agent containing an alkyl group-containing compound having a hydrolyzable silyl group and being free of fluorine and/or a partial hydrolytic condensate thereof.

### < Surface treating agent containing fluoropolyether group-containing polymer having silanol group or hydrolyzable silyl group and/or partial (hydrolytic) condensate thereof >

As the fluoropolyether group-containing polymer having a silanol group or a hydrolyzable silyl group, at least one fluoropolyether group-containing polymer having the following formula (1), (4), or (7) is preferably used. Especially, a fluoropolyether group-containing polymer having the following formula (4) is preferable.

[Chem. 13] A¹-Rf-D (1)

wherein Rf is a divalent perfluoropolyether group, A¹ is a monovalent fluorinated hydrocarbon group which is terminated with CF₃- or CF₂H- and may contain oxygen or A¹ is D, D is independently a monovalent group having the following formula (2):

   [Chem. 14] -Q-Z(W)_{α} (2)
wherein Q is a single bond or a divalent organic group, Z is a tri to octa-valent group, α is an integer of 2 to 7, W is independently a monovalent silanol group or hydrolyzable silyl group-containing group having the following formula (3): 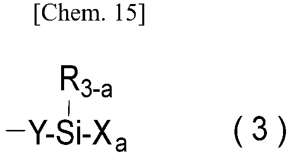
wherein R is a C₁-C₄ alkyl group or a phenyl group, X is independently a hydroxyl group or a hydrolyzable group, a is 2 or 3, Y is a single bond or a divalent hydrocarbon group which may contain at least one moiety selected from fluorine, silicon, and a siloxane bond,

   [Chem. 16] A²-Rf-G (4)
wherein Rf is as defined above, A² is a monovalent fluorinated hydrocarbon group which is terminated with CF₃- or CF₂H- and may contain oxygen, or G, G is independently a monovalent group having the following formula (5): 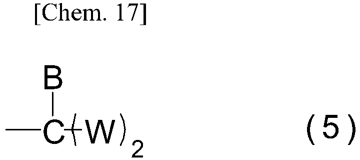
wherein W is as defined above, B is hydrogen or -OS, S is hydrogen, a C₁-C₁₀ monovalent hydrocarbon group, or a monovalent group having the following formula (6): 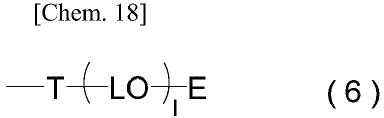
wherein T is a single bond or a divalent group, L is independently a C₁-C₄ divalent hydrocarbon group, E is a C₁-C₆ monovalent hydrocarbon group or W, l is an integer of 0 to 20,

   [Chem. 19] A³-Rf-J (7)
wherein Rf is as defined above, A³ is a monovalent fluorinated hydrocarbon group which is terminated with CF₃- or CF₂H- and may contain oxygen, or J, J is independently a monovalent group having the following formula (8): 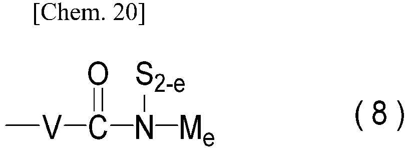
wherein S is as defined above, V is a single bond or a C₂-C₁₅ divalent hydrocarbon group which may contain an ether bond, M is independently a monovalent group having the following formula (9): 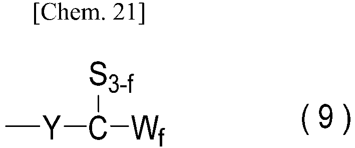
wherein Y, S, and W are as defined above, and f is an integer of 1 to 3,
   e is 1 or 2, J containing at least two W.

First, the fluoropolyether group-containing polymer having the following formula (1) is described.

[Chem. 22] A¹-Rf-D (1)

In the formula (1), Rf is a divalent perfluoropolyether group, preferably a divalent perfluoropolyether group represented
by -C_{d}F_{2d}-O-(CF₂O)ₚ(C₂F₄O)_{q}(C₃F₆O)ᵣ(C₄F₈O)ₛ(C₅F₁₀O)ₜ(C₆F₁₂O)ᵤ-C_{d}F_{2d}- wherein d is an integer of 0 to 5, preferably an integer of 0 to 2, and more preferably 0 or 1 for each unit, p, q, r, s, t, and u are each independently an integer of 0 to 150, preferably an integer of 0 to 100, and more preferably an integer of 0 to 60, and the sum of p, q, r, s, t, and u is an integer of 1 to 250, preferably an integer of 3 to 140, and more preferably an integer of 7 to 70. Each unit may be straight or branched. The repeat units in parentheses with subscripts p, q, r, s, t, and u may be randomly arranged.

Specifically, the divalent perfluoropolyether group Rf can be represented by the following structures.

[Chem. 23] -C_{d'}F_{2d'}-O-(C₂F₄O)_{q'}-C_{d'}F_{2d'}--C_{d'}F_{2d'}-O-(C₃F₆O)_{r'}-C_{d'}F_{2d'}--C_{d'}F_{2d'}-O-(CF₂O)_{p'}(C₂F₄O)_{q'}-C_{d'}F_{2d'}--C_{d'}F_{2d'}-O-(C₂F₄O)_{q'}(C₄F₈O)_{s'}-C_{d'}F_{2d'}--C_{d'}F_{2d'}-O-(CF₂O)_{p'}(C₂F₄O)_{q'}(C₃F₆O)_{r'}-C_{d'}F_{2d'}--C_{d'}F_{2d'}-O-(C₂F₄O)_{q'}(C₄F₈O)_{s'}(C₆F₁₂O)_{u'}-C_{d'}F_{2d'}--C_{d'}F_{2d'}-O-(CF₂O)_{p'}(C₂F₄O)_{q'}(C₃F₆O)_{r'}(C₅F₁₀O)_{t'}-C_{d'}F_{2d'}--C_{d'}F_{2d'}-O-(CF₂O)_{p'}(C₂F₄O)_{q'}(C₃F₆O)_{r'}(C₄F₈O)_{s'}(C₅F₁₀O)_{t'}(C₆F₁₂O)_{u'}-C_{d'}F_{2d'}-

Herein p', q', r', s', t', and u' are each independently an integer of 1 to 150, the sum of p', q', r', s', t', and u' is 12 to 250, and each unit may be straight or branched. The repeat units in parentheses with subscripts p', q', r', s', t', and u' may be randomly arranged. d' is an integer of 0 to 5 independently for each unit. Each unit may be straight or branched.

In the formula (1): A¹-Rf-D, A¹ is a monovalent fluorinated hydrocarbon group which is terminated with CF₃- or CF₂H- and may contain oxygen, or A¹ is D (a monovalent group having the formula (2): -Q-Z(W)_{α} described below), and the monovalent fluorinated hydrocarbon group which is terminated with CF₃- or CF₂H- and may contain oxygen is preferably a C₁-C₆ fluoroalkyl group, more preferably a group giving a polymer terminated with CF₃- or CF₂H-.

Examples of the monovalent fluorinated hydrocarbon group which is terminated with CF₃- or CF₂H- and may contain oxygen, represented by A¹, include the following groups.

[Chem. 24] CF₂H- CF₃- C₂F₅- C₃F₇- C₄F₉-CF₂HCF₂- C₃F₇OCFHCF₂OCH₂- CF₃OCFHCF₂OCH₂-CF₃OC₃F₆OCFHCF₂OCH₂-

In the formula (1): A¹-Rf-D, D is independently a monovalent group having the following formula (2).

[Chem. 25] -Q-Z(W)_{α} (2)

In the formula (2), Q is a single bond or a divalent organic group. The group Q other than a single bond is preferably an unsubstituted or substituted divalent hydrocarbon group of 1 to 15 carbon atoms, preferably 2 to 15 carbon atoms, which may contain at least one bond selected from the group consisting of an amide bond (e.g., an unsubstituted amide bond, an N-methyl-substituted amide bond, or an N-phenyl-substituted amide bond), an ether bond, an ester bond, a sulfide bond, a urethane bond, a siloxane bond, a triazine bond, a diorganosilylene moiety (e.g., a dialkylsilylene moiety such as a dimethylsilylene moiety), a silarylene bond (e.g., a silphenylene bond), and a silalkylene bond (e.g., a silethylene bond), and is preferably an unsubstituted or fluorine-substituted divalent hydrocarbon group of 1 to 12 carbon atoms, preferably 2 to 12 carbon atoms, which may contain the aforementioned bond.

Examples of the silalkylene bond and the silarylene bond are shown below.

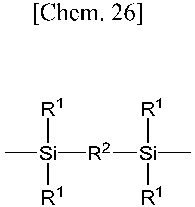

Herein, each R¹ is a C₁-C₈, preferably C₁-C₄ alkyl group such as a methyl, ethyl, propyl, or butyl group, or a C₆-C₁₀ aryl group such as a phenyl group, and R¹s may be the same or different. R² is a C₁-C₄ alkylene group such as a methylene, ethylene, or propylene group (trimethylene or methylethylene group), or a C₆-C₁₀ arylene group such as a phenylene group.

Examples of the group Q other than a single bond are shown below. In the following structures, preferably the valence bond on the left is attached to Rf and the valence bond on the right is attached to Z.

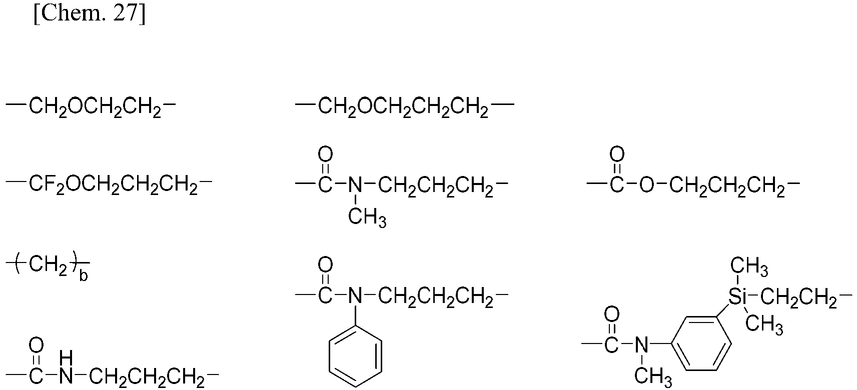

Herein b is an integer of 2 to 4.

In the formula (2): -Q-Z(W)_{α}, Z is a tri to octa-valent group, preferably silicon, nitrogen, or a tri to octa-valent organopolysiloxane residue having a siloxane bond, and more preferably a tri to octa-valent, still more preferably tri or tetra-valent group selected from straight, branched, or cyclic organopolysiloxane residues of 3 to 13 silicon atoms, preferably 3 to 5 silicon atoms. Z may contain a silalkylene structure, such as a silethylene structure, in which two silicon atoms are linked by an alkylene group such as an ethylene group, that is, Si-(CH₂)ₙ-Si wherein n is an integer of 2 to 6, preferably 2 to 4.

Examples of the tri to octa-valent organopolysiloxane residue having a siloxane bond are shown below.

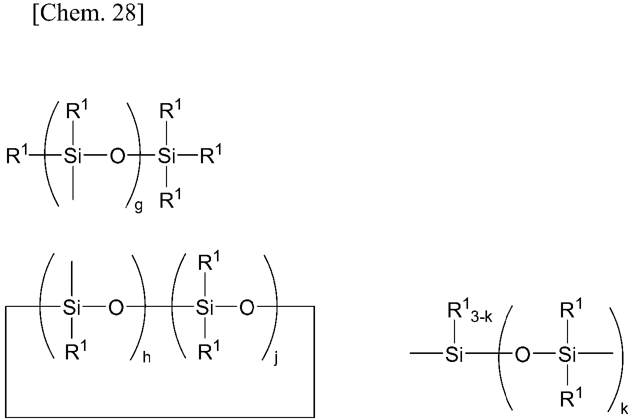

Herein R¹ is as defined above, g is an integer of 3 to 12, preferably 3 or 4, h is an integer of 3 to 8, preferably 3 or 4, j is an integer of 0 to 8, preferably 0 or 1, h + j is an integer of 3 to 13, preferably 3 to 5, and k is 2 or 3.

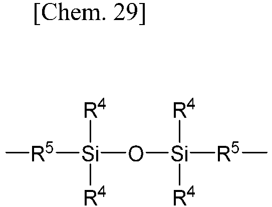

Herein R⁴ is independently R¹ or a group having the following formula (a): 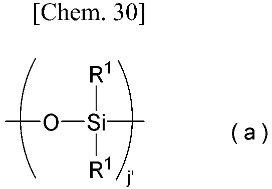
wherein R¹ is as defined above, j' is an integer of 1 to 6, preferably 1, the valence bond on the left is attached to Si,
   and R⁵ is independently a single bond or a group having the following formula (b): 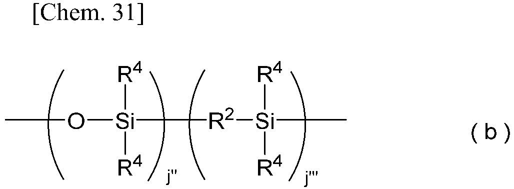
wherein R² and R⁴ are as defined above, j" is an integer of 0 to 6, preferably 0 to 3, j‴ is an integer of 0 to 6, preferably 0 to 2, the repeat units in parentheses may be randomly arranged, the valence bond on the left is attached to Si, and
   at least one R⁴ is a group having the formula (a).

Examples of Z are shown below. In the following structures, preferably the valence bond on the left is attached to Q and other valence bonds are each attached to W.

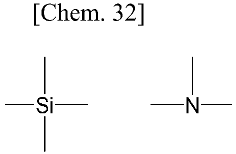

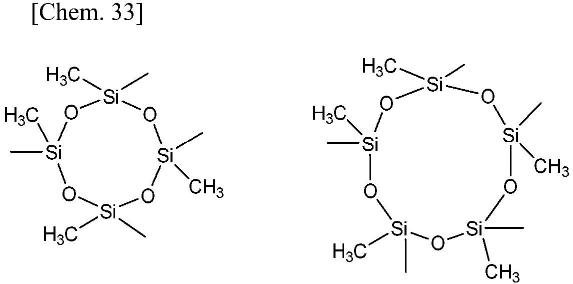

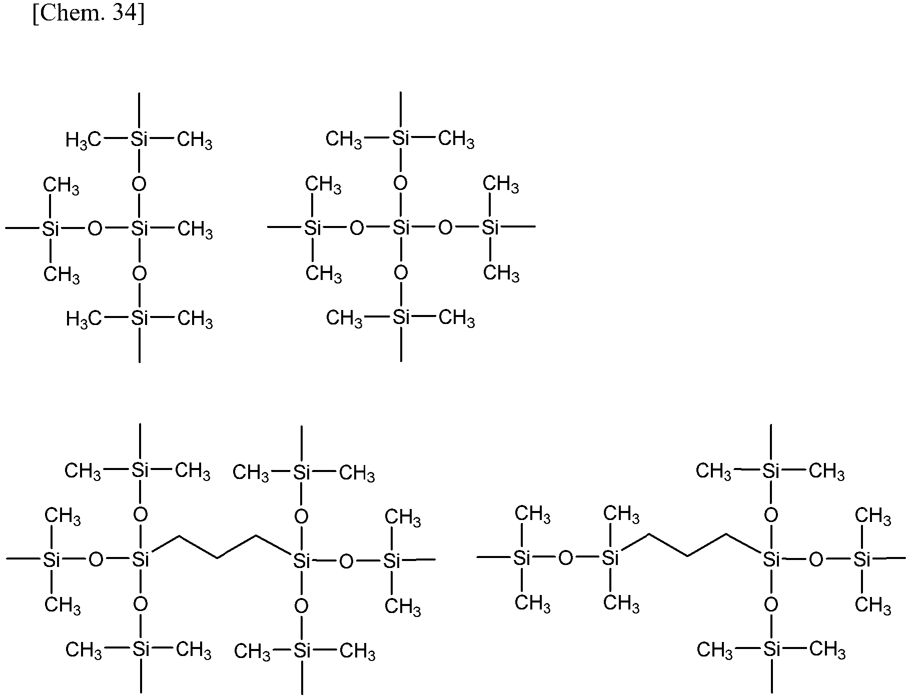

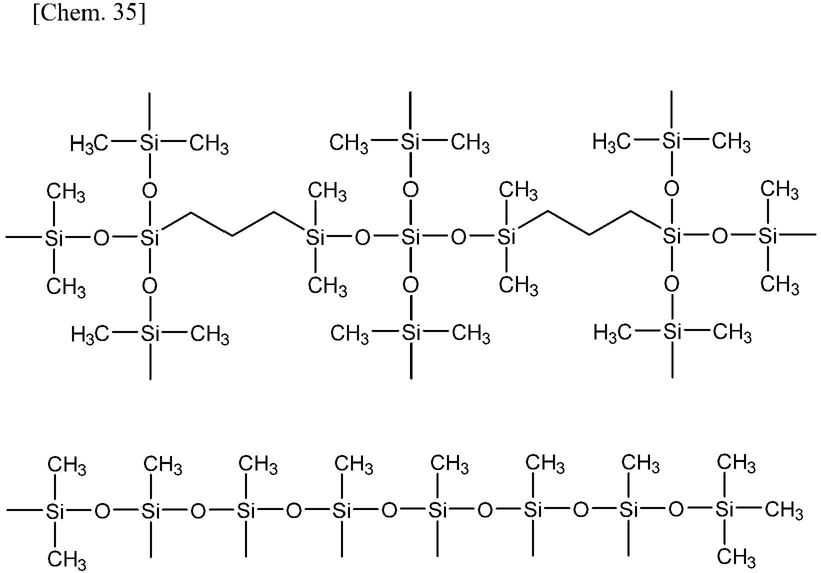

In the formula (2): -Q-Z(W)_{α}, W is independently a monovalent silanol group or hydrolyzable silyl group-containing group having the following formula (3): 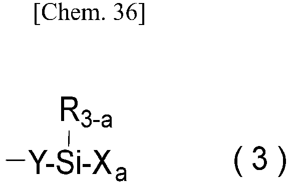 wherein R is a C₁-C₄ alkyl group or a phenyl group, X is independently a hydroxyl group or a hydrolyzable group, a is 2 or 3, Y is a single bond or a divalent hydrocarbon group which may contain at least one moiety selected from fluorine, silicon, and a siloxane bond.

In the formula (3), Xs may be different from each other, and are each a hydroxyl group or a hydrolyzable group. Examples of X include a hydroxyl group, C₁-C₁₀ alkoxy groups such as methoxy, ethoxy, propoxy, isopropoxy, butoxy, isobutoxy, sec-butoxy, and tert-butoxy groups, C₂-C₁₀ alkoxy-substituted alkoxy groups such as methoxymethoxy, methoxyethoxy, ethoxymethoxy, and ethoxyethoxy groups, C₂-C₁₀ acyloxy groups such as acetoxy and propionoxy groups, C₂-C₁₀ alkenyloxy groups such as vinyloxy, allyloxy, propenoxy, and isopropenoxy groups, and halogen groups such as chloro, bromo, and iodo groups. Among them, methoxy, ethoxy, isopropenoxy, and chloro groups are preferable.

In the formula (3), R is a C₁-C₄ alkyl group such as a methyl, ethyl, propyl, or butyl group or a phenyl group, and among them, methyl and ethyl groups are preferable.

In the formula (3), a is 2 or 3, preferably 3 from the aspects of reactivity and adhesion to the substrate.

In the formula (3), Y is a single bond or a divalent hydrocarbon group of preferably 1 to 20 carbon atoms which may contain at least one moiety selected from fluorine, silicon, and a siloxane bond. The divalent hydrocarbon group which may contain at least one moiety selected from fluorine, silicon, and a siloxane bond is a group selected from the group consisting of C₁-C₁₀ alkylene groups, C₁-C₁₀ alkylene groups containing fluorine, alkylene groups containing a C₆-C₈ arylene moiety (alkylene-arylene groups), divalent groups having alkylene groups linked via a silalkylene structure or silarylene structure, and divalent groups in which a C₂-C₁₀ alkylene group is attached to a valence bond of a divalent straight organopolysiloxane residue of 2 to 10 silicon atoms or a divalent branched or cyclic organopolysiloxane residue of 3 to 10 silicon atoms.

Specific examples of the group Y other than a single bond are shown below. In the following structures, the valence bond on the right is preferably attached to a silicon atom.

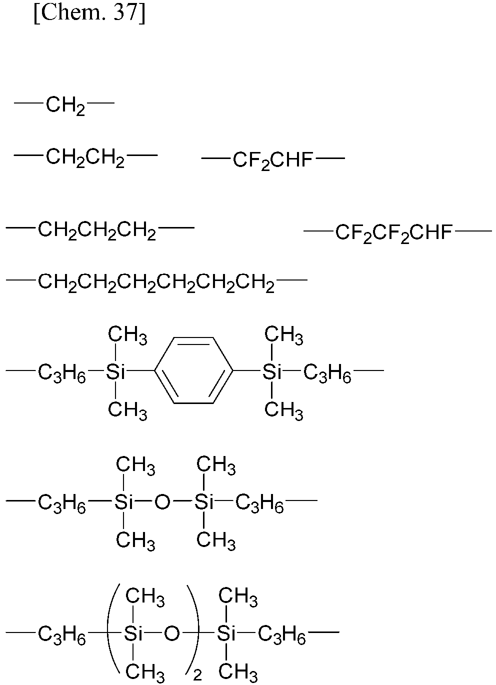

Examples of the group having the formula (3) are shown below.

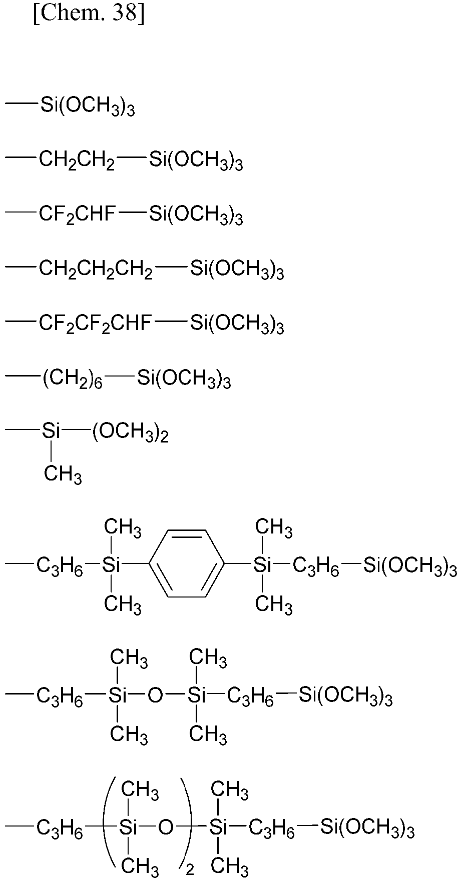

In the formula (2): -Q-Z(W)_{α}, "α" indicative of the number of W is an integer of 2 to 7.

Examples of the group having the formula (2): -Q-Z(W)_{α} (D in the formula (1)) are shown below.

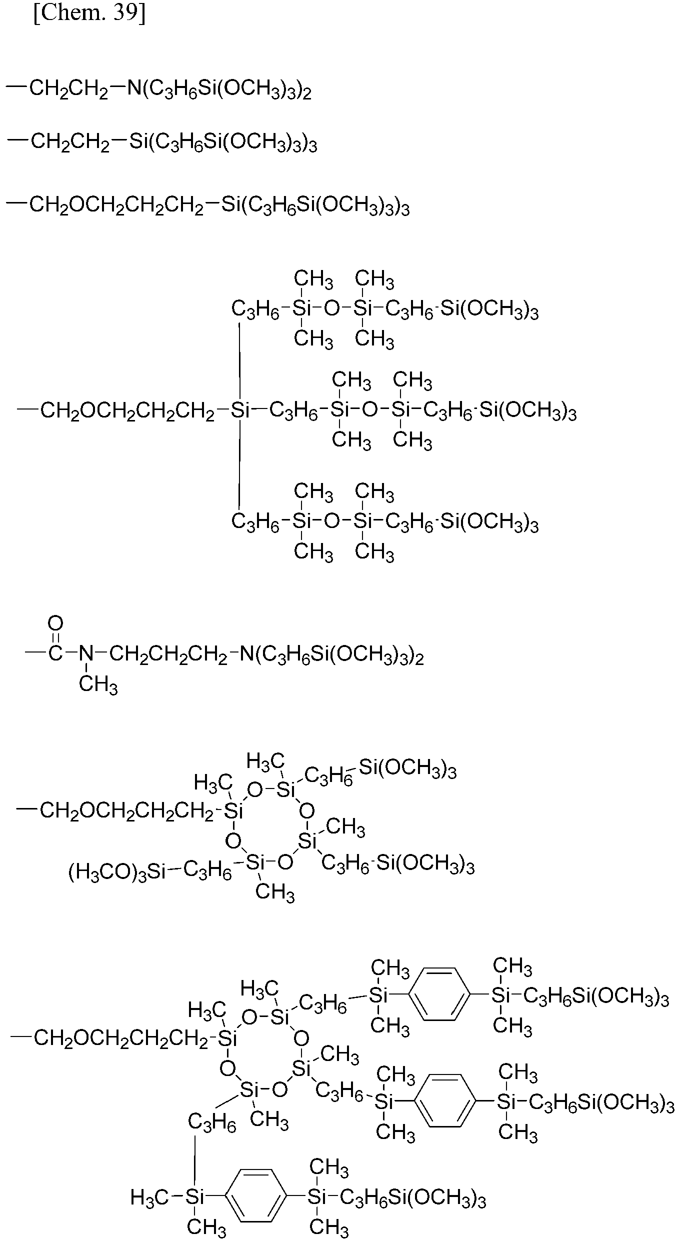

Examples of the fluoropolyether group-containing polymer having the formula (1) are shown below.

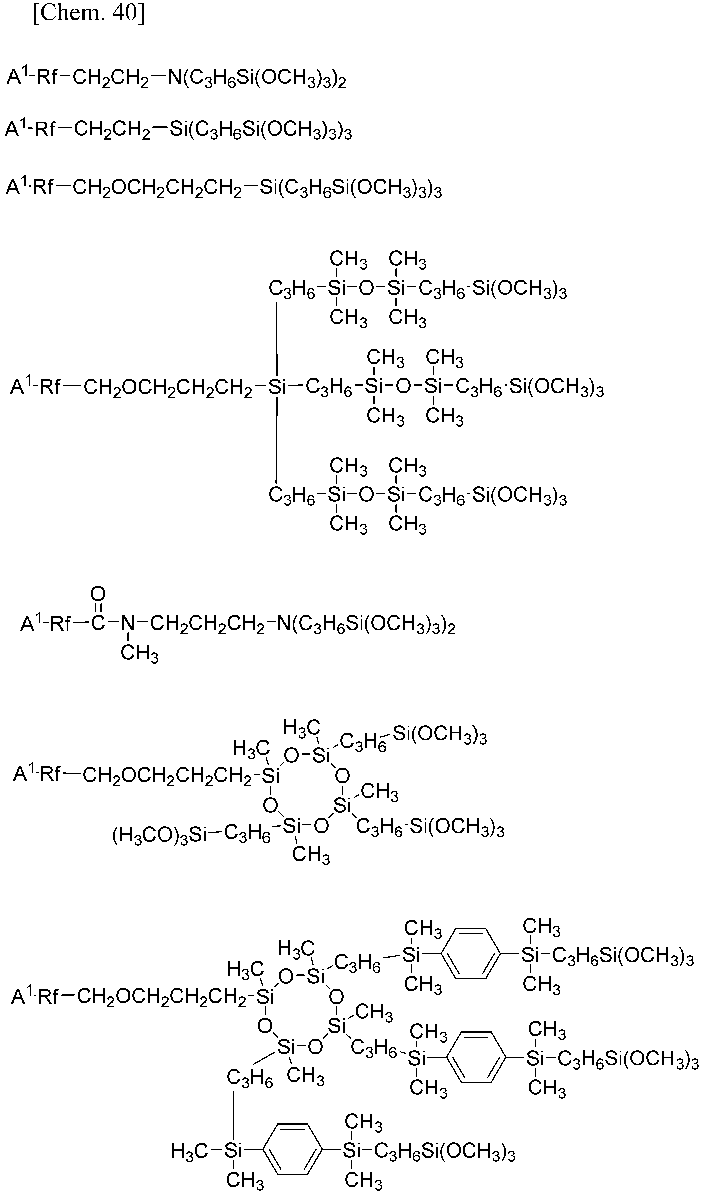

Herein A¹ and Rf are as defined above.

Next, the fluoropolyether group-containing polymer having the following formula (4) is described.

[Chem. 41] A²-Rf-G (4)

In the formula (4), Rf is as defined above and as exemplified above for Rf in the formula (1).

In the formula (4): A²-Rf-G, A² is a monovalent fluorinated hydrocarbon group which is terminated with CF₃- or CF₂H- and may contain oxygen, or A² is G (a monovalent group having the formula (5): -C(B)(W)₂ described below). The monovalent fluorinated hydrocarbon group which is terminated with CF₃- or CF₂H- and may contain oxygen is preferably a C₁-C₆ fluoroalkyl group, more preferably a group giving a polymer terminated with CF₃- or CF₂H-.

Examples of the monovalent fluorinated hydrocarbon group which is terminated with CF₃- or CF₂H- and may contain oxygen, represented by A², include the following groups.

[Chem. 42] CF₂H- CF₃- C₂F₅- C₃F₇- C₄F₉-CF₂HCF₂- C₃F₇OCFHCF₂OCH₂- CF₃OCFHCF₂OCH₂-CF₃OC₃F₆OCFHCF₂OCH₂-

In the formula (4): A²-Rf-G, G is independently a monovalent group having the following formula (5).

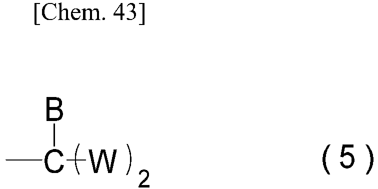

In the formula (5), W is as defined above and as exemplified above for W in the formula (2).

In the formula (5): -C(B)(W)₂, B is hydrogen or -OS, and S is hydrogen, a C₁-C₁₀ monovalent hydrocarbon group, or a monovalent group having the following formula (6).

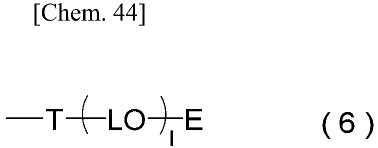

Examples of the C₁-C₁₀ monovalent hydrocarbon group represented by S include alkyl groups such as methyl, ethyl, propyl, butyl, pentyl, hexyl, and octyl groups, alkenyl groups such as vinyl and allyl groups, aryl groups such as phenyl and tolyl groups, and aralkyl groups such as benzyl and phenylethyl groups, and C₁-C₃ alkyl groups and a phenyl group are preferable.

In the formula (6): -T-(LO)₁-E, T is a single bond or a divalent group, preferably a single bond or a C₂-C₂₀ divalent hydrocarbon group which may contain at least one bond selected from the group consisting of silicon, a siloxane bond, a silalkylene bond (e.g., silethylene bond or silpropylene bond), a silarylene bond (e.g., silphenylene bond), and a diorganosilylene moiety (e.g., dialkylsilylene moiety such as dimethylsilylene or dialkoxysilylene moiety such as dimethoxysilylene), a divalent siloxane bond, a silalkylene group, or a diorganosilylene group. Specific examples of the group T other than a single bond are shown below. In the following structures, the valence bond on the right is preferably attached to L or E.

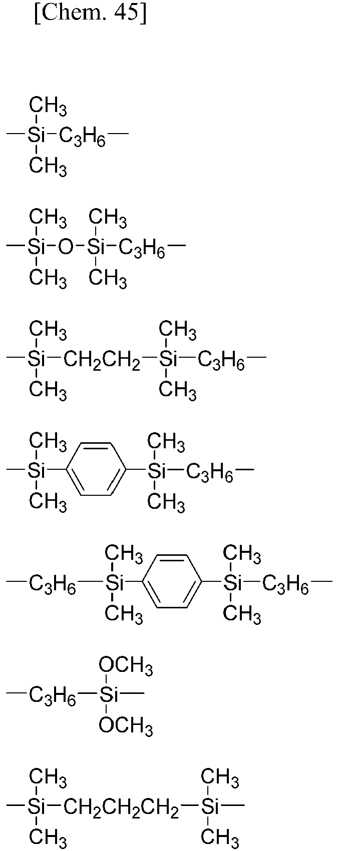

In the formula (6): -T-(LO)₁-E, L is independently a C₁-C₄ divalent hydrocarbon group, typically an alkylene group such as a methylene, ethylene, propylene (trimethylene or methylethylene), or butylene (tetramethylene) group. For (LO) units, the number of carbon atoms may be identical or different.

In the formula (6): -T-(LO)₁-E, 1 is an integer of 0 to 20, preferably 0 to 10, and more preferably 0 to 6. In a case where (LO) is contained, 1 is preferably 1 or more, and more preferably 2 or more.

In the formula (6): -T-(LO)₁-E, E is a C₁-C₆ monovalent hydrocarbon group, typically a C₁-C₄ alkyl group such as a methyl, ethyl, propyl, or butyl group or a phenyl group, or E is W. W is as defined above and as exemplified above for W in the formula (2).

Examples of the monovalent group having the formula (6): -T-(LO)₁-E are shown below.

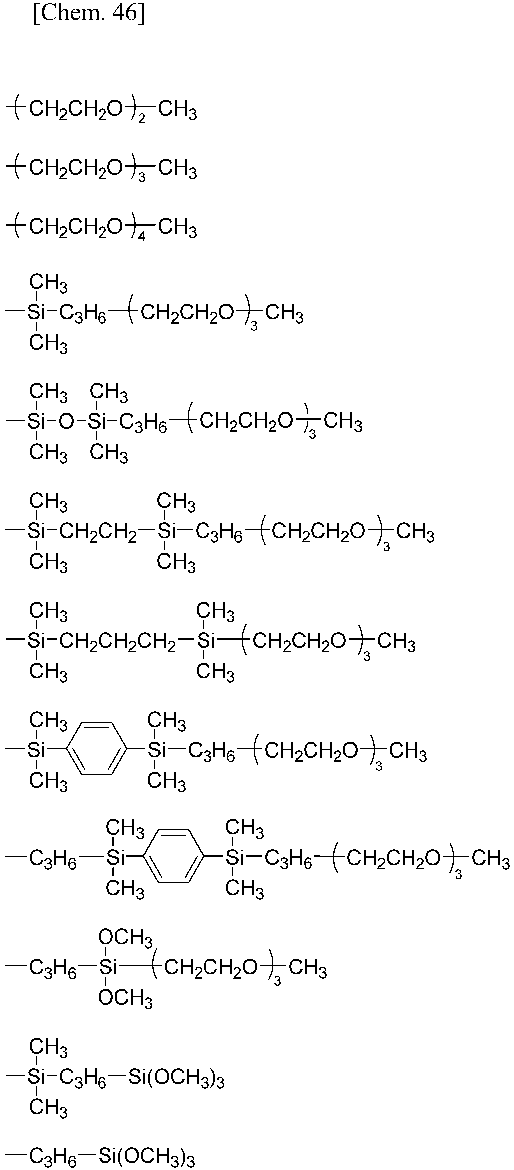

Examples of the monovalent group having the formula (5): -C(B)(W)₂ (G in the formula (4)) are shown below.

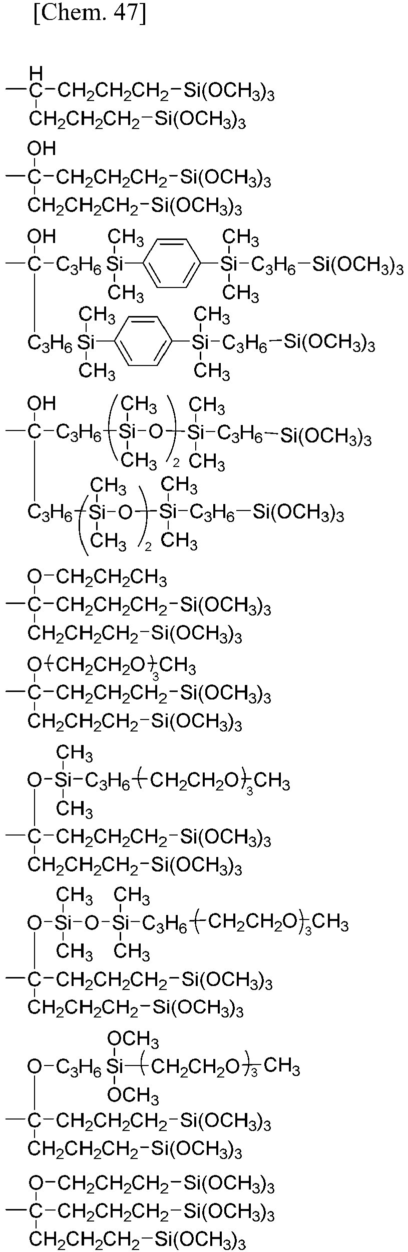

Examples of the fluoropolyether group-containing polymer having the formula (4) are shown below.

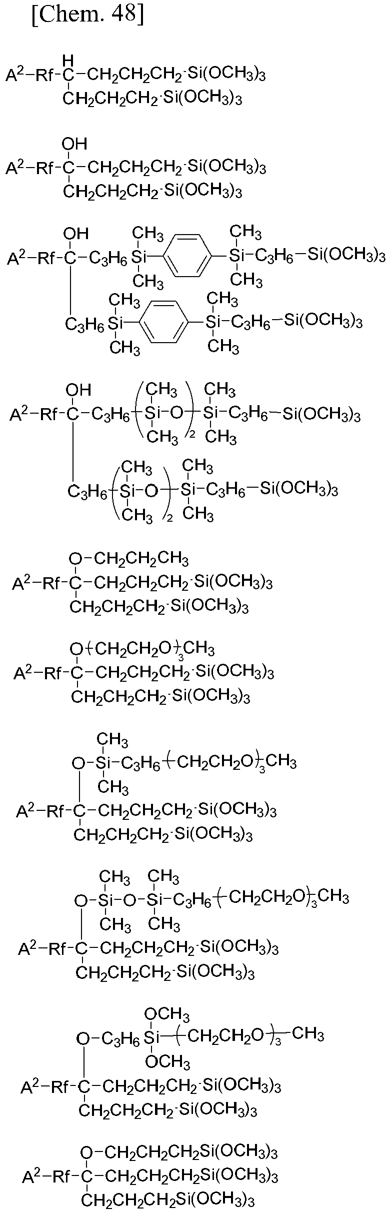

Herein A² and Rf are as defined above.

Next, the fluoropolyether group-containing polymer having the following formula (7) is described.

[Chem. 49] A³-Rf-J (7)

In the formula (7), Rf is as defined above and as exemplified above for Rf in the formula (1).

In the formula (7): A³-Rf-J, A³ is a monovalent fluorinated hydrocarbon group which is terminated with CF₃- or CF₂H- and may contain oxygen, or A³ is J (a monovalent group having the formula (8): -V-C(=O)N(S)₂₋ₑ(M)ₑ described below). The monovalent fluorinated hydrocarbon group which is terminated with CF₃- or CF₂H- and may contain oxygen is preferably a C₁-C₆ fluoroalkyl group, more preferably a group giving a polymer terminated with CF₃- or CF₂H-.

Examples of the monovalent fluorinated hydrocarbon group which is terminated with CF₃- or CF₂H- and may contain oxygen, represented by A³, include the following groups.

[Chem. 50] CF₂H- CF₃- C₂F₅- C₃F₇- C₄F₉-CF₂HCF₂- C₃F₇OCFHCF₂OCH₂- CF₃OCFHCF₂OCH₂-CF₃OC₃F₆OCFHCF₂OCH₂-

In the formula (7): A³-Rf-J, J is independently a monovalent group having the formula (8), and J contains at least two W.

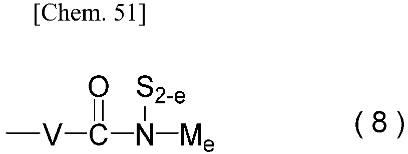

In the formula (8), S is as defined above and as exemplified above for S.

In the formula (8), V is a single bond or a C₂-C₁₅ divalent hydrocarbon group which may contain an ether bond. Specific examples of the group V other than a single bond are shown below. In the following structures, the valence bond on the right is preferably attached to a carbon atom (-C(=O)-).

[Chem. 52] -CH₂OCH₂--CH₂OCH₂CH₂CH₂CH₂--CH₂CH₂CH₂OCH₂CH₂CH₂-

In the formula (8), e is 1 or 2, preferably 1.

In the formula (8), M is independently a monovalent group having the following formula (9).

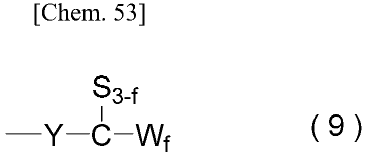

In the formula (9), Y, S, and W are as defined above and as exemplified above for Y in the formula (3), S, and W in the formula (2).

In the formula (9), f is an integer of 1 to 3.

Examples of the monovalent group having the formula (9): -Y-C(S)_{3-f}(W)_{f} (M in the formula (8)) are shown below.

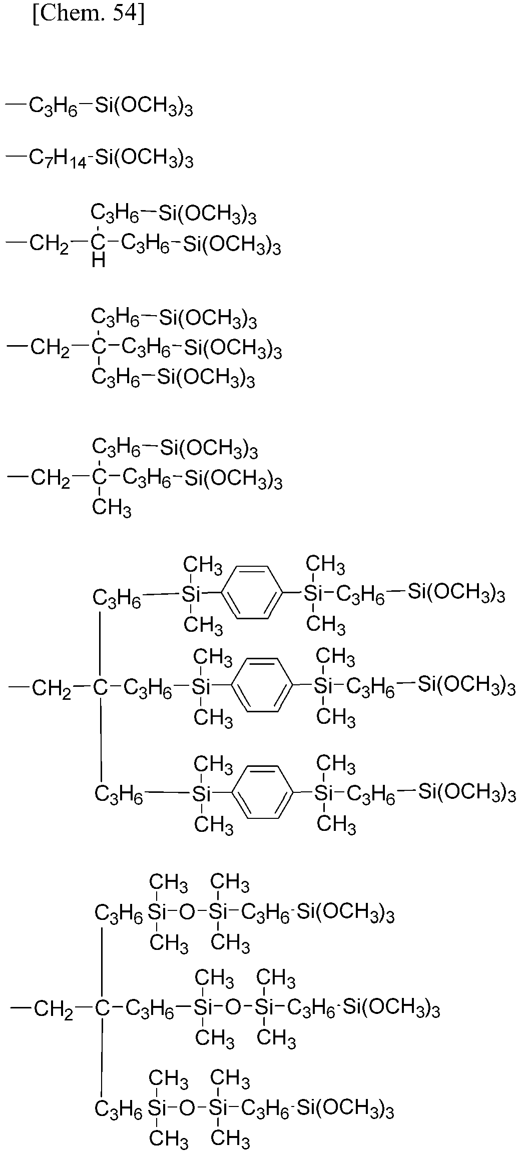

Examples of the monovalent group having the formula (8): -V-C(=O)N(S)₂₋ₑ(M)ₑ (J in the formula (7)) are shown below.

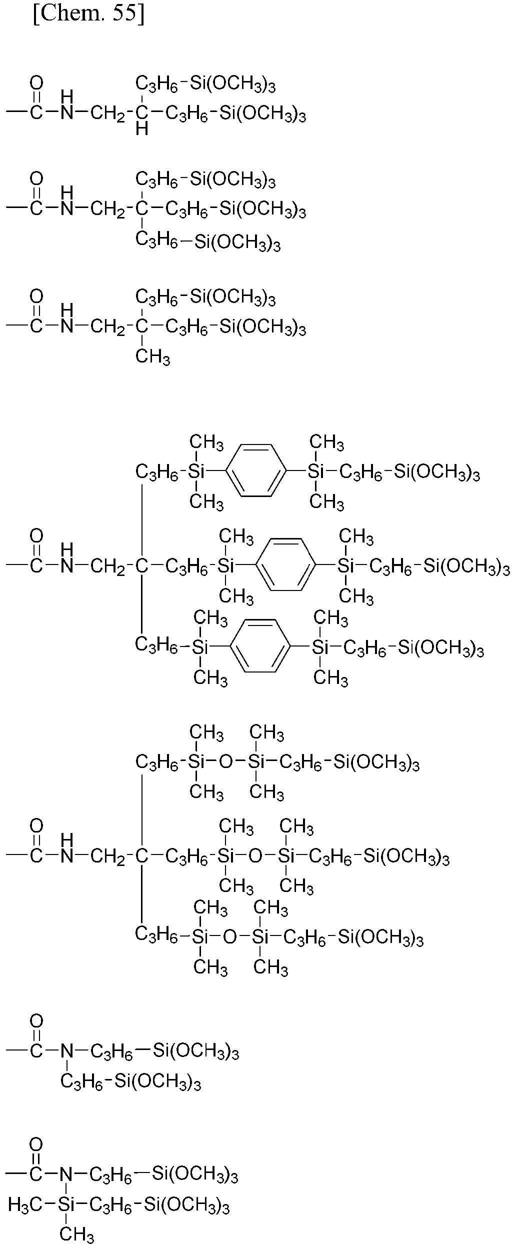

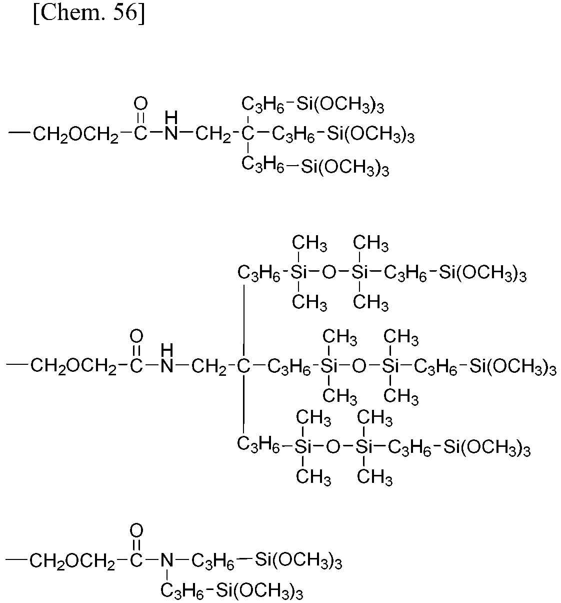

Examples of the fluoropolyether group-containing polymer having the formula (7) are shown below.

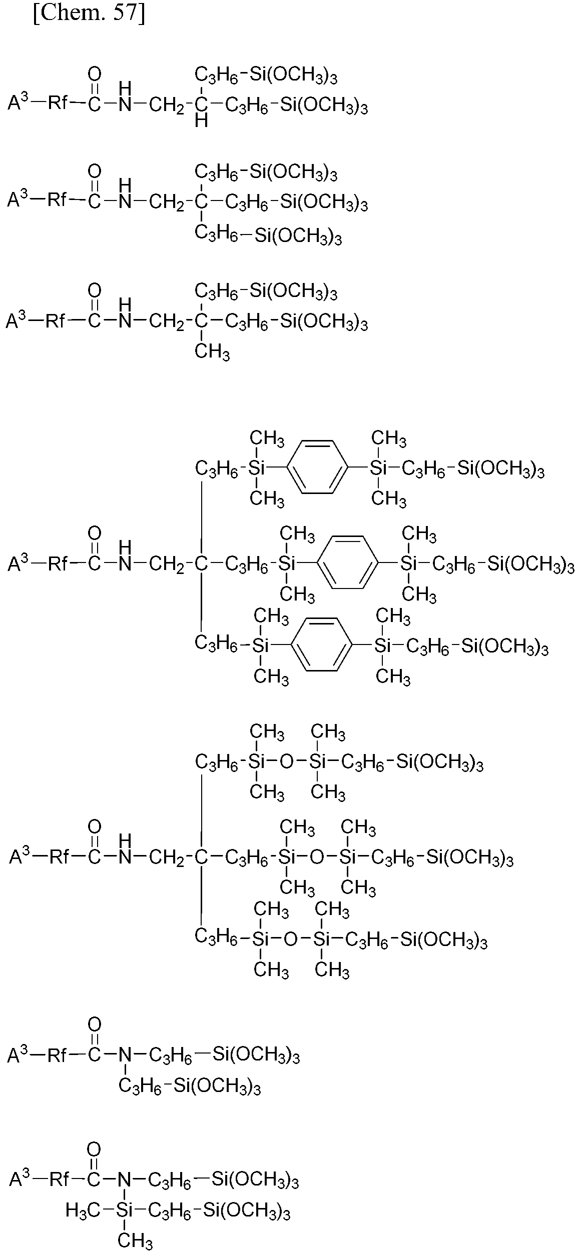

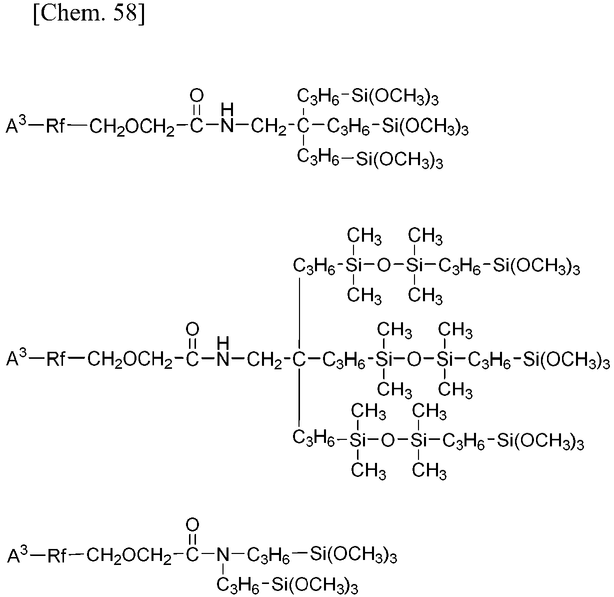

Herein A³ and Rf are as defined above.

The surface treating agent containing a fluoropolyether group-containing polymer having a silanol group or a hydrolyzable silyl group and/or a partial (hydrolytic) condensate thereof may contain, in addition to the fluoropolyether group-containing polymer having a silanol group or a hydrolyzable silyl group and/or a partial (hydrolytic) condensate thereof, a fluoropolyether group-containing polymer being free of a hydrolyzable silyl group and having the following formula (10) (hereinafter, referred to as a hydrolyzable silyl group-free polymer) and/or a partial (hydrolytic) condensate thereof.

[Chem. 59] A⁴-Rf-A⁴ (10)

In the formula, Rf is as defined above and as exemplified above for Rf in the formula (1). A⁴ is independently a monovalent fluorinated hydrocarbon group which is terminated with CF₃- or CF₂H- and may contain oxygen, or -OR³, -COOR³, or -PO(OR³)₂ wherein R³ is hydrogen or a C₁-C₁₀ monovalent hydrocarbon group.

In the formula (10), A⁴ is independently a monovalent fluorinated hydrocarbon group which is terminated with CF₃- or CF₂H- and may contain oxygen, or -OR³, -COOR³, or -PO(OR³)₂. The monovalent fluorinated hydrocarbon group which is terminated with CF₃- or CF₂H- and may contain oxygen is as exemplified above for the monovalent fluorinated hydrocarbon group which is terminated with CF₃- or CF₂H- and may contain oxygen, represented by A¹.

Herein, R³ is hydrogen or a C₁-C₁₀ monovalent hydrocarbon group. Examples of the monovalent hydrocarbon group include alkyl groups such as methyl, ethyl, propyl, butyl, pentyl, hexyl, and octyl groups, alkenyl groups such as vinyl and allyl groups, aryl groups such as phenyl and tolyl groups, and aralkyl groups such as benzyl and phenylethyl groups. R³ is preferably hydrogen, a C₁-C₃ alkyl group, or a phenyl group.

Examples of -OR³, -COOR³, and -PO(OR³)₂ represented by A⁴ include -OH, -OCH₃, -COOH, -COOCH₃, -PO(OH)₂, -OC₂H₅, and -COOC₂H₅.

Examples of the fluoropolyether group-containing polymer having the formula (10) are shown below.

[Chem. 60] CF₃-O-(CF₂O)_{p"}(C₂F₄O)_{q"}(C₃F₄O)_{r"}(C₄F₈O)_{s"}(C₅F₁₀O)_{t"}(C₆F₁₂O)_{u"}-CF₃ CF₃-O-(CF₂O)_{p:}(C₂F₄O)_{q"}(C₃F₆O)_{r"}(C₄F₈O)_{3"}(C₅F₁₀O)_{t"}(C₆F₁₂O)_{u"}-CF₂-COOH CF₃-O-(CF₂O)_{p"}(C₂F₄O)_{q"}(C₃F₆O)_{r"}(C₄F₈O)_{s"}(C₅F₁₀O)_{t"}(C₆F₁₂O)_{u"}-CF₂-COOCH₃ CF₃-O-(CF₂O)_{p"}(C₂F₄O)_{q"}(C₃F₆O)_{r"}(C₄F₈O)_{s"}(C₅F₁₀O)_{t"}(C₆F₁₂O)_{u"}-CF₂-PO(OH)₂ CF₃-O-(CF₂O)_{p"}(C₂F₄O)_{q"}(C₃F₆O)_{r"}(C₄F₈O)_{s"}(C₅F₁₀O)_{t"}(C₆F₁₂O)_{u"}-CF₂-OH CF₃-O-(CF₂O)_{p"}(C₂F₄O)_{q"}(C₃F₆O)_{r"}(C₄F₈O)_{s"}(C₅F₁₀O)_{t"}(C₆F₁₂O)_{u"}-CF₂-OCH₃ HOOC-CF₂-O-(CF₂O)_{p"}(C₂F₄O)_{q"}(C₃F₆O)_{r"}(C₄F₁₀O)_{s"}(C₆F₁₀O)_{t"}(C₆F₁₂O)_{u"}-CF₂-COOH HO-CF₂-O-(CF₂O)_{p"}(C₂F₄O)_{q"}(C₃F₆O)_{r"}(C₄F₆O)_{3"}(C₅F₁₀O)_{t"}(C₆F₁₂O)_{u"}-CF₂-OH

Herein p", q", r", s", t", and u" are each independently an integer of 0 to 150, the sum of p", q", r", s", t", and u" is 12 to 250, and each unit may be straight or branched. The repeat units in parentheses with subscripts p", q", r", s", t", and u" may be randomly arranged.

The surface treating agent containing a fluoropolyether group-containing polymer having a silanol group or a hydrolyzable silyl group and/or a partial (hydrolytic) condensate thereof preferably contains at least one fluoropolyether group-containing polymer having the formula (1), (4), or (7) and having at least two silanol or hydrolyzable silyl groups at one end of the molecular chain and/or a partial (hydrolytic) condensate thereof (single end type polymer), or contains at least one fluoropolyether group-containing polymer having the formula (1), (4), or (7) and having at least two silanol or hydrolyzable silyl groups at each end of the molecular chain and/or a partial (hydrolytic) condensate thereof (dual end type polymer), or contains a mixture containing at least one single end type polymer and at least one dual end type polymer, or contains a mixture (hereinafter referred to as a fluoropolyether group-containing polymer composition) containing any one of the foregoing and the hydrolyzable silyl group-free polymer.

In a case where the surface treating agent containing a fluoropolyether group-containing polymer having a silanol group or a hydrolyzable silyl group and/or a partial (hydrolytic) condensate thereof contains the hydrolyzable silyl group-free polymer, although the mixing ratio of the single end type polymer and/or the dual end type polymer to the hydrolyzable silyl group-free polymer is not particularly limited, typically the hydrolyzable silyl group-free polymer is desirably 0.01 to 30 mol%, more desirably 0.1 to 10 mol% of the overall fluoropolyether group-containing polymer composition including the single end type polymer and/or the dual end type polymer and the hydrolyzable silyl group-free polymer.

In the surface treating agent containing a fluoropolyether group-containing polymer having a silanol group or a hydrolyzable silyl group and/or a partial (hydrolytic) condensate thereof, the numerical average molecular weight of the fluoropolyether group-containing polymer having a silanol group or a hydrolyzable silyl group and/or a partial (hydrolytic) condensate thereof, or the numerical average molecular weight of the fluoropolyether group-containing polymer composition is preferably in a range of 1000 to 20000. The numerical average molecular weight is more preferably 2000 to 10000, and still more preferably 3000 to 8000. The numerical average molecular weight can be computed from a ratio of characteristic peak strengths in ¹⁹F-NMR spectroscopy.

The fluoropolyether group-containing polymer having a silanol group or a hydrolyzable silyl group and/or a partial (hydrolytic) condensate thereof, or the fluoropolyether group-containing polymer composition, having a numerical average molecular weight in the above range can be obtained by rectification or molecular distillation of the fluoropolyether group-containing polymer having a silanol group or a hydrolyzable silyl group and/or a partial (hydrolytic) condensate thereof, or the fluoropolyether group-containing polymer composition.

The fluoropolyether group-containing polymer having a silanol group or a hydrolyzable silyl group and/or a partial (hydrolytic) condensate thereof, or the fluoropolyether group-containing polymer composition, having a numerical average molecular weight in the above range can also be prepared by previously using a fluorine compound for synthesis of the fluoropolyether group-containing polymer so that the above numerical average molecular weight is obtained.

To the surface treating agent containing a fluoropolyether group-containing polymer having a silanol group or a hydrolyzable silyl group and/or a partial (hydrolytic) condensate thereof, a hydrolytic condensation catalyst may be added as necessary, and examples of the hydrolytic condensation catalyst include organotin compounds (e.g., dibutyltin dimethoxide and dibutyltin dilaurate), organotitanium compounds (e.g., tetra-n-butyl titanate), organic acids (e.g., acetic acid, methanesulfonic acid, and fluorine-modified carboxylic acid), and inorganic acids (e.g., hydrochloric acid and sulfuric acid). Among them, acetic acid, tetra-n-butyl titanate, dibutyltin dilaurate, and fluorine-modified carboxylic acid are especially desirable. The addition amount is a catalytic amount and is typically 0.01 to 5 parts by weight, especially 0.1 to 1 part by weight per 100 parts by weight of the fluoropolyether group-containing polymer having a silanol group or a hydrolyzable silyl group and/or a partial (hydrolytic) condensate thereof.

The surface treating agent containing a fluoropolyether group-containing polymer having a silanol group or a hydrolyzable silyl group and/or a partial (hydrolytic) condensate thereof may contain a solvent. The solvent is preferably a fluorine-modified aliphatic hydrocarbon-based solvent (e.g., perfluoroheptane or perfluorooctane), a fluorine-modified olefin-based solvent (e.g., methoxyperfluoroheptene), a fluorine-modified aromatic hydrocarbon-based solvent (e.g., m-xylene hexafluoride, benzotrifluoride, or 1,3-bis(trifluoromethyl)benzene), a fluorine-modified ether-based solvent (e.g., methyl perfluorobutyl ether, ethyl perfluorobutyl ether, or perfluoro(2-butyltetrahydrofuran)), a fluorine-modified alkyl amine-based solvent (e.g., perfluorotributylamine or perfluorotripentylamine), a hydrocarbon-based solvent (e.g., petroleum benzine, mineral spirits, toluene, or xylene), or a ketone-based solvent (e.g., acetone, methyl ethyl ketone, or methyl isobutyl ketone). Among them, fluorine-modified solvents (referred to as fluorinated solvents) are desirable in view of solubility and wettability. Especially, 1,3-trifluoromethylbenzene, m-xylene hexafluoride, perfluoro(2-butyltetrahydrofuran), perfluorotributylamine, and ethyl perfluorobutyl ether are preferable.

Two or more of the solvents may be mixed, and it is preferable to uniformly dissolve a fluoropolyether group-containing polymer having a silanol group or a hydrolyzable silyl group and/or a partial (hydrolytic) condensate thereof, or a fluoropolyether group-containing polymer composition. The optimum concentration of the fluoropolyether group-containing polymer having a silanol group or a hydrolyzable silyl group and/or a partial (hydrolytic) condensate thereof to be dissolved in the solvent may be selected as appropriate, without limitation, depending on how to apply the surface treating agent. The polymer and/or a partial (hydrolytic) condensate thereof is typically dissolved in the solvent so that the concentration is 0.01 to 30 wt%, preferably 0.02 to 25 wt%, and more preferably 0.05 to 20 wt%.

### < Surface treating agent containing alkyl group-containing compound having hydrolyzable silyl group and being free of fluorine and/or partial hydrolytic condensate thereof >

As the alkyl group-containing compound having a hydrolyzable silyl group and being free of fluorine, an alkyl group-containing compound having a hydrolyzable silyl group and being free of fluorine, represented by the following formula (11), (12), or (13) (provided that the formula (12) is a molecular formula of a monomer or a composition formula of a polymer) is preferably used. Especially, the compound having the following formula (11) is preferable.

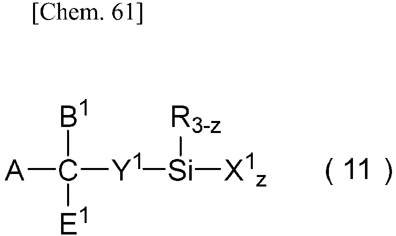

Herein A is a C₁-C₅₀ monovalent hydrocarbon group, B¹ is hydrogen or a hydroxyl group, E¹ is hydrogen or a C₁-C₅₀ monovalent hydrocarbon group, A and E¹ contain 12 or more carbon atoms in total, Y¹ is a single bond or a divalent hydrocarbon group which may contain at least one moiety selected from silicon and a siloxane bond, R is a C₁-C₄ alkyl group or a phenyl group, X¹ is independently a hydrolyzable group, and z is 2 or 3.

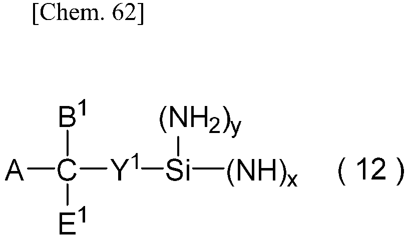

Herein A, B¹, E¹, Y¹ are as defined above, y is a number of 0 to 3, x represents (3 - y)/2, the formula (12) is a molecular formula of a monomer in a case where y is 3, and the formula (12) is a composition formula of a polymer in a case where y is less than 3.

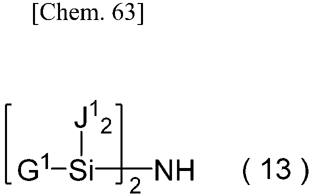

Herein G¹ is independently a C₈-C₃₀ monovalent hydrocarbon group, and J¹ is independently hydrogen, a hydroxyl group, or a methyl group.

In the formulae (11) and (12), A is a monovalent hydrocarbon group of 1 to 50 carbon atoms, preferably 10 to 50 carbon atoms, B¹ is hydrogen or a hydroxyl group, and E¹ is hydrogen or a monovalent hydrocarbon group of 1 to 50 carbon atoms, preferably 10 to 50 carbon atoms. Examples of the monovalent hydrocarbon groups of 1 to 50 carbon atoms, represented by A and E¹, are shown below.

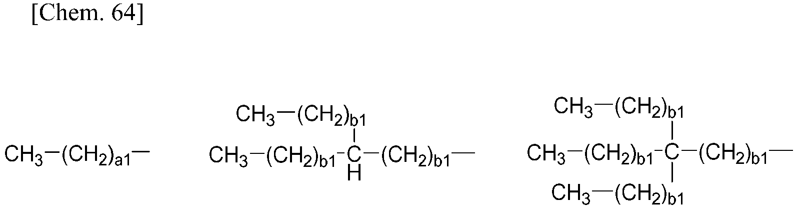

Herein a1 is an integer of 0 to 49, preferably 9 to 49, b1 is each independently an integer of 1 or more, and the total number of carbon atoms in each structure is an integer of 50 or less, preferably 1 to 43.

A is preferably a saturated monovalent straight hydrocarbon group of 10 to 50 carbon atoms, B¹ is preferably a hydroxyl group, and E¹ is preferably a saturated monovalent straight hydrocarbon group of 10 to 50 carbon atoms.

In the formulae (11) and (12), A and E¹ contain 12 or more, preferably 20 to 60 carbon atoms in total.

In the formulae (11) and (12), Y¹ is a single bond or a divalent hydrocarbon group of preferably 1 to 20 carbon atoms which may contain at least one moiety selected from silicon and a siloxane bond. Specific examples of the divalent hydrocarbon group include alkylene groups of 1 to 20 carbon atoms, preferably 1 to 10 carbon atoms, C₁ to C₁₀ alkylene groups containing a C₆-C₈ arylene moiety (e.g., C₇ to C₁₈ alkylene-arylene groups), divalent groups having C₁ to C₈ alkylene groups linked via a diorganosilylene moiety, a silalkylene structure, or a silarylene structure, and divalent groups in which a C₁-C₁₀ alkylene group is attached to a valence bond of a straight organopolysiloxane residue of 2 to 10 silicon atoms, especially 2 to 8 silicon atoms, or a branched or cyclic organopolysiloxane residue of 3 to 10 silicon atoms, especially 3 to 8 silicon atoms.

Here, the group bonded to a silicon atom in a diorganosilylene moiety, a silalkylene structure, a silarylene structure, an organopolysiloxane residue, and the like is preferably an alkyl group of 1 to 8 carbon atoms, preferably 1 to 4 carbon atoms, such as a methyl, ethyl, propyl, or butyl group, or a phenyl group. The alkylene group in the silalkylene structure is preferably a group of 2 to 6 carbon atoms, preferably 2 to 4 carbon atoms, such as an ethylene, propylene (trimethylene or methylethylene), or butylene (tetramethylene or methylpropylene) group. Furthermore, the organopolysiloxane residue may include a silalkylene structure in which two silicon atoms are linked by an alkylene group such as an ethylene or propylene group.

Examples of Y¹ are shown below. In the following structures, preferably the valence bond on the left is attached to a carbon atom and the valence bond on the right is attached to a silicon atom.

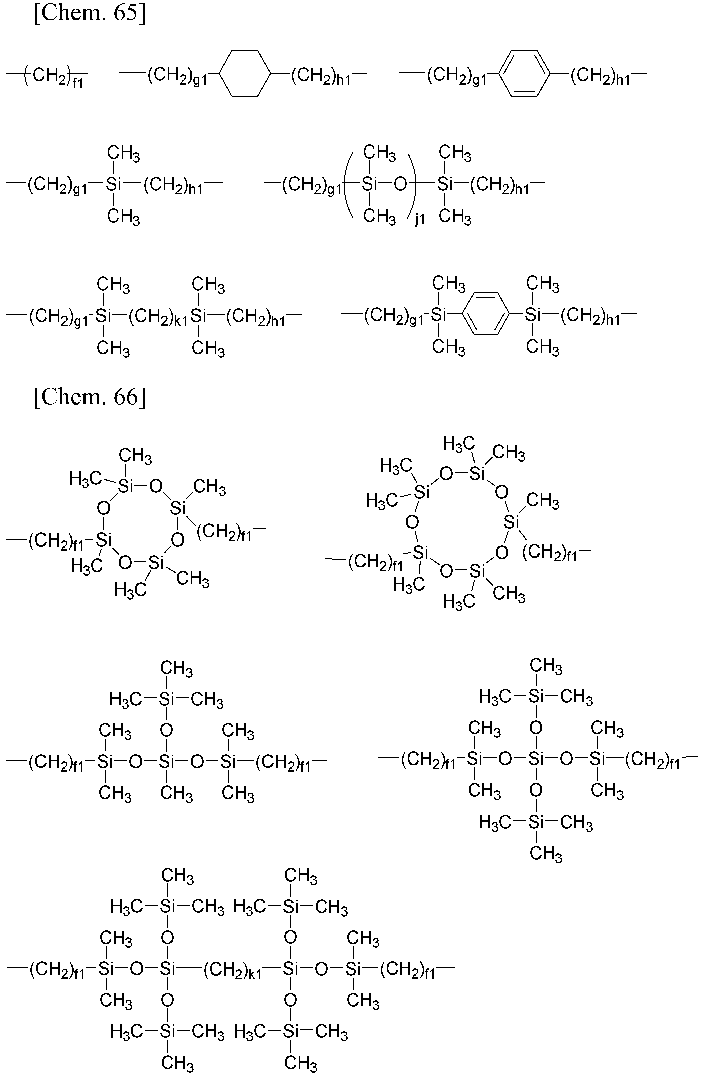

Herein f1 is independently an integer of 1 to 10, g1 and h1 are each an integer of 1 to 8, and the sum of g1 and h1 is an integer of 2 to 10. j1 is an integer of 1 to 9, and k1 is an integer of 2 to 4.

In the formula (11), X¹ is independently a hydrolyzable group. Examples of the hydrolyzable group include C₁-C₁₀ alkoxy groups such as methoxy, ethoxy, propoxy, isopropoxy, butoxy, isobutoxy, sec-butoxy, and tert-butoxy groups, C₂-C₁₀ alkoxy-substituted alkoxy groups such as methoxymethoxy, methoxyethoxy, ethoxymethoxy, and ethoxyethoxy groups, C₂-C₁₀ acyloxy groups such as acetoxy and propionoxy groups, C₂-C₁₀ alkenyloxy groups such as vinyloxy, allyloxy, propenoxy, and isopropenoxy groups, and halogen groups such as chloro, bromo, and iodo groups. Among them, methoxy, ethoxy, isopropenoxy, and chloro groups are preferable.

In the formula (11), R is a C₁-C₄ alkyl group or a phenyl group, and among them, methyl and ethyl groups are preferable.

In the formula (11), z is 2 or 3, preferably 3.

In the formula (12), y is a number of 0 to 3 (0 or a positive number of 3 or less), preferably a number of 0 to 2, and more preferably 0. x is (3 - y)/2, preferably 1.5. The formula (12) is a molecular formula of a monomer in a case where y is 3, and the formula (12) is a composition formula of a polymer in a case where y is less than 3.

In the formula (13), G¹ is independently a monovalent hydrocarbon group of 8 to 30 carbon atoms, preferably 10 to 28 carbon atoms, and examples of G¹ are shown below.

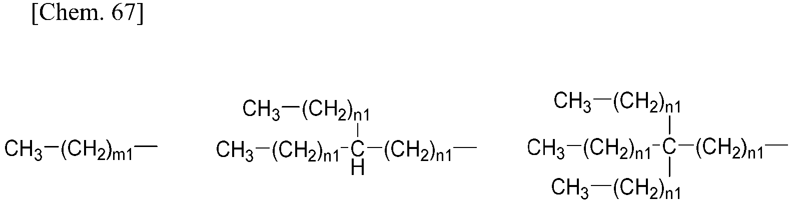

Herein m1 is an integer of 7 to 29, preferably an integer of 9 to 27, which is the number of carbon atoms, each n1 is an integer of 1 or more, and the total number of carbon atoms in each structure is an integer of 8 to 30, preferably 10 to 28.

In the formula (13), J¹ is independently hydrogen, a hydroxyl group, or a methyl group, and among them, a methyl group is preferable.

Specific examples of the compound having the formula (11) include octadecyltrimethoxysilane, octadecyltrichlorosilane, octadecyltriethoxysilane, dodecyltrimethoxysilane, triacontyltrichlorosilane, and the compound shown below.

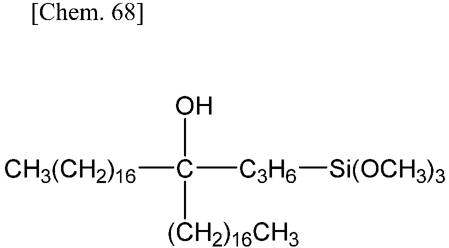

Specific examples of the compound having the formula (12) are shown below.

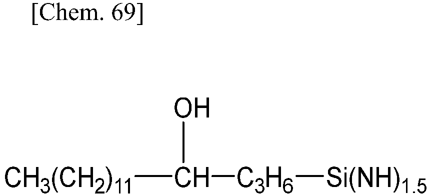

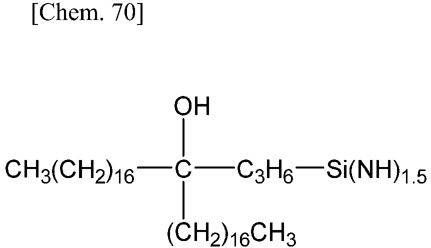

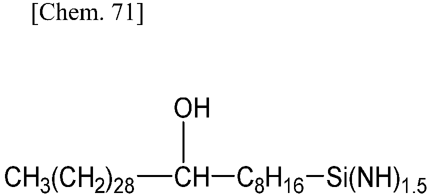

Specific examples of the compound having the formula (13) include 1,3-dioctadecyl-1,1,3,3-tetramethyldisilazane, 1,3-didodecyl-1,1,3,3-tetramethyldisilazane, 1,3-didecyl-1,1,3,3-tetramethyldisilazane, and 1,3-dioctyl-1,1,3,3-tetramethyldisilazane.

Examples of a method of producing the compound having the formula (11) in which E¹ is a C₁-C₅₀ monovalent hydrocarbon group include the following methods.

The compound can be produced by mixing a terminal hydrocarbon group-containing compound having an alkenyl group at an end and a compound having a SiH group and a hydrolyzable silyl group, and subjecting the resulting mixture to a hydrosilylation addition reaction in the presence of a hydrosilylation catalyst (preparation method 1).

The compound can also be produced by mixing a terminal hydrocarbon group-containing compound having a SiH group at an end and a compound having an alkenyl group and a hydrolyzable silyl group, and subjecting the resulting mixture to a hydrosilylation addition reaction in the presence of a hydrosilylation catalyst (preparation method 2).

Here, examples of the terminal hydrocarbon group-containing compound having an alkenyl group at an end include compounds having the following formula (11a).

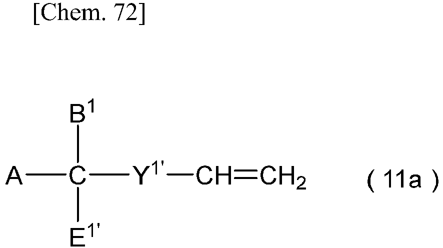

Herein A and B¹ are as defined above. E^{1'} is a C₁-C₅₀ monovalent hydrocarbon group, A and E^{1'} contain 12 or more carbon atoms in total, Y^{1'} is a divalent hydrocarbon group of preferably 1 to 18 carbon atoms which may contain at least one moiety selected from silicon and a siloxane bond.

In the formula (11a), E^{1'} is a C₁-C₅₀ monovalent hydrocarbon group and is as exemplified above for the C₁-C₅₀ monovalent hydrocarbon group represented by E.

In the formula (11a), Y^{1'} is a divalent hydrocarbon group of preferably 1 to 18 carbon atoms which may contain at least one moiety selected from silicon and a siloxane bond, and examples of Y^{1'} are shown below. In the following structures, preferably the valence bond on the left is attached to a carbon atom bonded to A, B¹, and E^{1'} and the valence bond on the right is attached to a vinyl group.

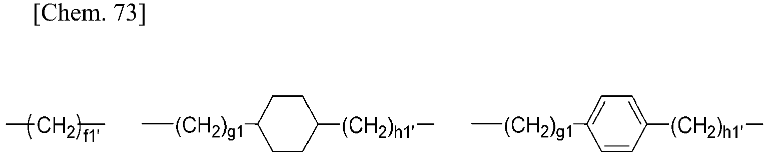

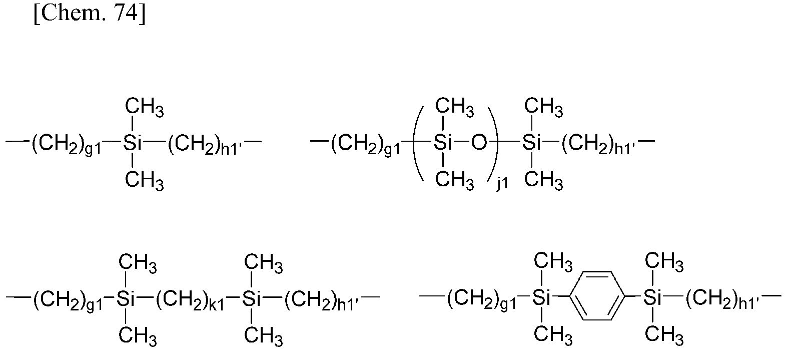

Herein g1, j1, and k1 are as defined above, f1^{'} is an integer of 0 to 8, h1^{'} is an integer of 0 to 6, and the sum of g1 and h1^{'} is an integer of 2 to 8.

Examples of the compound having the formula (11a) are shown below.

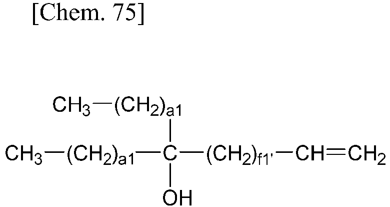

Herein a1 and f1^{'} are each independently as defined above.

Examples of the compound having a SiH group and a hydrolyzable silyl group include trimethoxysilane, triethoxysilane, triacetoxysilane, and trichlorosilane.

In the preparation method 1, the amount of the compound having a SiH group and a hydrolyzable silyl group used is preferably 1 to 6 mol, more preferably 1.5 to 4 mol per mol of the alkenyl group in the terminal hydrocarbon group-containing compound having an alkenyl group at an end.

Examples of the terminal hydrocarbon group-containing compound having a SiH group at an end include compounds having the following formula (11b).

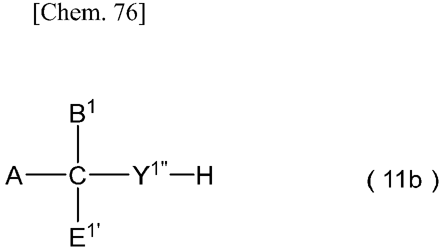

Herein A, B¹, and E^{1'} are as defined above, and Y^{1"} is a divalent hydrocarbon group having a silicon atom or a siloxane bond.

In the formula (11b), Y^{1"} is a divalent hydrocarbon group having a silicon atom or a siloxane bond, and examples of Y^{1"} are shown below. In the following structures, preferably the valence bond on the left is attached to a carbon atom and the valence bond on the right is attached to a hydrogen atom.

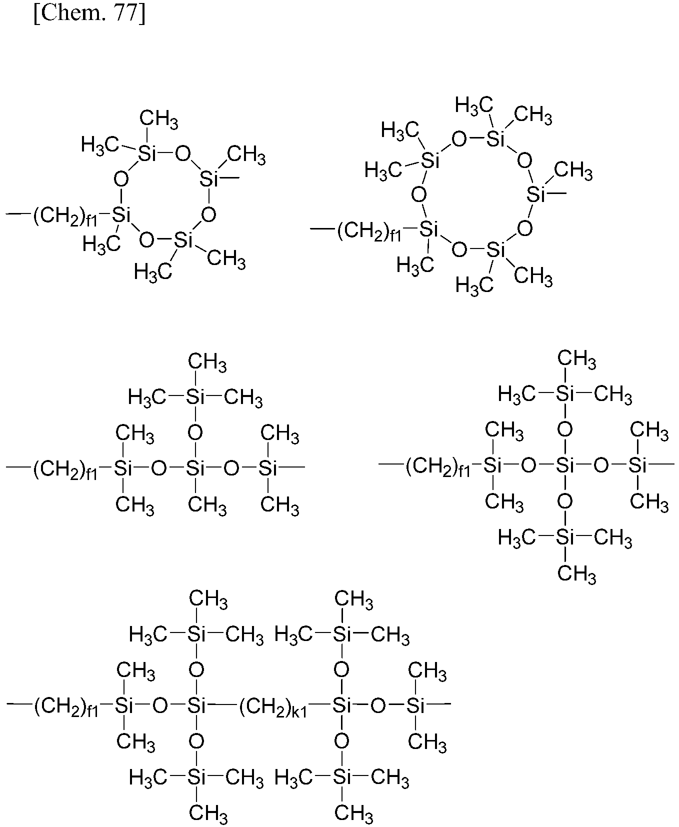

Herein f1 and k1 are as defined above.

Examples of the compound having the formula (11b) are shown below.

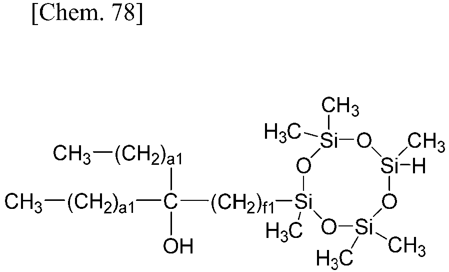

Herein a1 and f1 are each independently as defined above.

Examples of the compound having an alkenyl group and a hydrolyzable silyl group include vinyltrimethoxysilane, allyltrimethoxysilane, and octenyltrimethoxysilane.

In the preparation method 2, the amount of the compound having an alkenyl group and a hydrolyzable silyl group used is preferably 1 to 5 mol, more preferably 1 to 3 mol per mol of the SiH group in the terminal hydrocarbon group-containing compound having a SiH group at an end.

In the preparation methods 1 and 2, examples of the hydrosilylation catalyst include platinum black, chloroplatinic acid, alcohol-modified products of chloroplatinic acid, complexes of chloroplatinic acid with an olefin, an aldehyde, vinylsiloxane, an acetylene alcohol, or the like, and platinum group metal-based catalysts such as tetrakis(triphenylphosphine)palladium and chlorotris(triphenylphosphine)rhodium. A platinum-based compound such as a vinylsiloxane coordination compound is preferable. The platinum-based compound is preferably dissolved in a solvent such as toluene, a lower alcohol, a higher alcohol, or a silicone-based solvent when used.

The amount of the hydrosilylation catalyst used is preferably 0.001 to 1000 ppm, more preferably 0.01 to 100 ppm in terms of transition metal (weight) per weight of the terminal hydrocarbon group-containing compound having an alkenyl group or a SiH group at an end.

In the preparation methods 1 and 2, a solvent can be used for performing the reaction. Examples of the solvent include aromatic hydrocarbons such as toluene and xylene, aliphatic or alicyclic hydrocarbons such as n-pentane, n-hexane, and cyclohexane, cyclic ether compounds such as tetrahydrofuran and dioxane, and ketones such as acetone and methyl ethyl ketone.

The amount of the solvent used is preferably 0 to 1000 parts by weight, and more preferably 50 to 200 parts by weight per 100 parts by weight of the terminal hydrocarbon group-containing compound having an alkenyl group or a SiH group at an end.

In the preparation methods 1 and 2, the reaction condition between the terminal hydrocarbon group-containing compound having an alkenyl group at an end and the compound having a SiH group and a hydrolyzable silyl group, and the reaction condition between the terminal hydrocarbon group-containing compound having a SiH group at an end and the compound having an alkenyl group and a hydrolyzable silyl group are each preferably set to a reaction time of 0.5 to 72 hours, especially 1 to 36 hours at a temperature of 20 to 120°C, especially 60 to 100°C.

A method of producing the compound having the formula (12) in which E¹ is a C₁-C₅₀ monovalent hydrocarbon group is, for example, the following method.

The compound can be produced by mixing a terminal hydrocarbon group-containing compound having an alkenyl group at an end with trichlorosilane, reacting the mixture in the presence of a hydrosilylation catalyst, and then reacting the resulting compound with an ammonia gas.

Here, the reaction product of the terminal hydrocarbon group-containing compound having an alkenyl group at an end with trichlorosilane can be prepared in the same manner as in the preparation method 1.

In the method of preparing the compound having the formula (12), the amount of the ammonia gas used is preferably 1 to 300 cc/min, especially 30 to 200 cc/min.

In the method of preparing the compound having the formula (12), the reaction condition between the reaction product of the terminal hydrocarbon group-containing compound having an alkenyl group at an end with trichlorosilane and the ammonia gas is preferably set to a reaction time of 2 to 36 hours, especially 4 to 12 hours at room temperature (23 ± 15°C, the same applies hereinafter), especially at a temperature of 20 to 30°C.

To the surface treating agent containing an alkyl group-containing compound having a hydrolyzable silyl group and being free of fluorine and/or a partial hydrolytic condensate thereof, a hydrolytic condensation catalyst may be added as necessary, and examples of the hydrolytic condensation catalyst include organotin compounds (e.g., dibutyltin dimethoxide and dibutyltin dilaurate), organotitanium compounds (e.g., tetra-n-butyl titanate), organic acids (e.g., acetic acid, methanesulfonic acid, and fluorine-modified carboxylic acid), and inorganic acids (e.g., hydrochloric acid and sulfuric acid). Among them, acetic acid, tetra-n-butyl titanate, and dibutyltin dilaurate are especially desirable. The addition amount is a catalytic amount and typically 0.01 to 5 parts by weight, especially 0.1 to 1 part by weight per 100 parts by weight of the alkyl group-containing compound having a hydrolyzable silyl group and being free of fluorine and/or a partial hydrolytic condensate thereof.

The surface treating agent containing an alkyl group-containing compound having a hydrolyzable silyl group and being free of fluorine and/or a partial hydrolytic condensate thereof may contain a solvent. The solvent is preferably a hydrocarbon-based solvent (e.g., petroleum benzine, mineral spirits, toluene, or xylene), a ketone-based solvent (e.g., acetone, methyl ethyl ketone, or methyl isobutyl ketone), an alcohol-based solvent (e.g., ethanol, 1-propanol, 2-propanol, or butanol), or an ether-based solvent (e.g., tetrahydrofuran (THF), monoethylene glycol dimethyl ether, diethylene glycol dimethyl ether, triethylene glycol dimethyl ether, tetraethylene glycol dimethyl ether, or dioxane).

Two or more of the above-described solvents may be mixed, and it is preferable to uniformly dissolve an alkyl group-containing compound having a hydrolyzable silyl group and being free of fluorine and/or a partial hydrolytic condensate thereof. The optimum concentration of the alkyl group-containing compound having a hydrolyzable silyl group and being free of fluorine and/or a partial hydrolytic condensate thereof to be dissolved in the solvent may be selected as appropriate, without limitation, depending on how to apply the surface treating agent. The compound and/or a partial hydrolytic condensate thereof is typically dissolved in the solvent so that the concentration is 0.01 to 30 wt%, preferably 0.02 to 25 wt%, and more preferably 0.05 to 20 wt%.

The water-repellent surface layer can be formed by applying a surface treating agent containing a reactive silyl compound exhibiting surface water repellency (the surface treating agent containing a fluoropolyether group-containing polymer having a silanol group or a hydrolyzable silyl group and/or a partial (hydrolytic) condensate thereof, or the surface treating agent containing an alkyl group-containing compound having a hydrolyzable silyl group and being free of fluorine and/or a partial hydrolytic condensate thereof) by wet or dry coating onto an outer surface of the primer layer formed as described above, then removing the solvent by drying from the surface treating agent, and curing the reactive silyl compound (the fluoropolyether group-containing polymer having a silanol group or a hydrolyzable silyl group and/or a partial (hydrolytic) condensate thereof or a fluoropolyether group-containing polymer composition, or the alkyl group-containing compound having a hydrolyzable silyl group and being free of fluorine and/or a partial hydrolytic condensate thereof).

For forming the water-repellent surface layer using the surface treating agent, a wet coating method can be used such as a brush coating method, a dip coating (dipping) method, or a spray coating method, or a dry coating method can be used such as a vapor deposition treatment (a physical vapor deposition (PVD) method or a chemical vapor deposition (CVD) method).

After the surface treating agent is applied, the solvent is removed by drying, and a curing treatment is performed. A wet coating method can be performed at 60 to 150°C, preferably 60 to 120°C at a relative humidity of 95% or less for 30 minutes to 24 hours, preferably 30 minutes to 2 hours. A dry coating method can be performed at 25°C to 150°C, preferably 25°C to 80°C at a relative humidity of 95% or less for 30 minutes to 48 hours, preferably 30 minutes to 24 hours.

The film thickness of the water-repellent surface layer is 0.5 to 20 nm, preferably 1 to 15 nm. If the film thickness of the water-repellent surface layer is less than 0.5 nm, the water repellency may deteriorate due to the influence of the property of the primer layer, and if the film thickness is more than 20 nm, an appearance such as a color tone may change due to a difference in refractive index between the substrate or the primer layer and the water-repellent surface layer. In the invention, the film thickness can be measured by X-ray reflectometry, spectroscopic ellipsometry, or the like.

By forming a primer layer on a substrate surface using the aqueous primer composition of the invention, a cured product of a reactive silyl compound exhibiting surface water repellency is firmly adhered to the substrate surface, and a water-repellent article having a water-repellent surface layer excellent in abrasion durability and chemical resistance can be produced. In a method of producing the water-repellent article, formation can be performed by only a wet process or by only a wet process and a dry process, without requiring a vacuum process or a high-temperature heating process. Thus, the water-repellent article of the invention can be applied to various applications, for example, mobile electronic devices, household electrical appliances, automobiles, outdoor goods, building materials, housing equipment, cases of glasses and the like, frames, floors, touch panels, windows, lenses, display covers, protective films, and the like.

### EXAMPLES

Examples and Comparative Examples are given below for illustrating the invention although the invention is not limited thereto. In Examples, the numerical average molecular weight is computed from a ratio of characteristic peak strengths in ¹⁹F-NMR spectroscopy.

### [Comparative Example 1]

### [Alkaline cleaning of glass substrate]

A soda lime glass substrate (size: 100 mm × 50 mm × 0.7 mm thick) was dipped in an alkaline cleaning liquid (aqueous solution of Semi-Clean L.G.L by Yokohama Oils & Fats Industry Co., Ltd., diluted to 5 wt%) and was ultrasonically cleaned for 5 minutes. Then the glass substrate was dipped in ion exchanged water and was ultrasonically cleaned for 6 minutes. The glass substrate was dried by ejecting compressed air to blow off water.

### [Plasma cleaning of glass substrate]

The surface of the glass substrate after the alkaline cleaning was treated with an oxygen/argon mixture plasma. The treatment conditions are shown below.

| | |
|---|---|
| Treatment device: | PDC510 (Yamato Scientific Co., Ltd.) |
| Oxygen gas flow rate: | 10 sccm (standard cubic centimeters) |
| Argon gas flow rate: | 100 sccm |
| Treating pressure: | 60 Pa |
| RF supply power: | 250 W |
| Treating time: | 30 seconds |

### [Formation of primer layer]

A glass substrate after the alkaline cleaning and the plasma cleaning was dip-coated with an aqueous primer composition 1 described below and then was dried by heating to form a primer layer having a film thickness of 4 nm. The dip-coating and heating conditions are shown below.

| | |
|---|---|
| Dipping time: | 30 seconds |
| Pull-up speed: | 0.5 mm/sec |
| Heating conditions: | 150°C, 30 minutes |

The film thickness of the primer layer was measured by X-ray reflectometry.

### [Aqueous primer composition 1]

An aqueous primer composition 1 was obtained by uniformly mixing 10 g of water-dispersed silica nano-particles (SNOWTEX ST-XS, manufactured by Nissan Chemical Corporation) and 1990 g of pure water, as a pure water dispersion liquid of silica nano-particles having an average particle size of 7 nm (silica nano-particle concentration: 0.1 wt%, pH: 9).

### [Preparation of surface treating agent I]

A surface treating agent I was obtained by dissolving a compound (A) having the following formula (numerical average molecular weight: 4000) in a fluorinated solvent (NOVEC HFE-7200 by 3M, ethyl perfluorobutyl ether) to a concentration of 20 wt%. 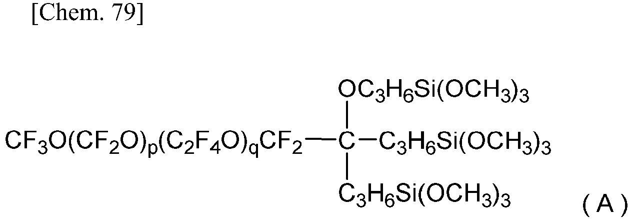 (p/q = 1.0, p + q = 42)

### [Formation of water-repellent surface layer by physical vapor deposition (PVD)]

The primer layer-bearing glass substrate was set in a vacuum evaporation system of resistance heating type (VTR-350M by ULVAC KIKO, Inc.). A droplet (5 µL) of the surface treating agent I was placed in the resistance heater chamber, and the chamber was evacuated. When the chamber was evacuated to or below an internal pressure of 3 × 10⁻³ Pa, resistance heating was started. The power fed for resistance heating was adjusted so that the maximum evaporation rate measured by a quartz oscillator film thickness meter which was spaced about 20 cm apart from the resistance heater chamber was 1.0 nm/sec. After the evaporation rate measured by the quartz oscillator film thickness meter decreased to 0.1 nm/sec, resistance heating was continued for a further 100 seconds. After a standby time of 5 minutes for cooling, the chamber was opened to air to obtain a glass substrate to which the surface treating agent I was applied.

The glass substrate to which the surface treating agent I was applied was allowed to stand in an environment of 25°C and a relative humidity of 50% for 24 hours to cure and fix the surface treating agent I, and thus a glass substrate having a water-repellent surface layer of a fluoropolyether group-containing polymer having a film thickness of 10 nm was obtained.

The film thickness of the water-repellent surface layer was computed by quantitatively measuring the strength of X-ray fluorescence attributable to a fluorine element using an X-ray fluorescence spectrometer (Rigaku Corporation, tradename: X-ray fluorescence spectrometer Primini), and plotting on the calibration line.

### [Comparative Example 2]

A glass substrate having a water-repellent surface layer was obtained in the same manner as in Comparative Example 1 except that the primer layer was changed to a SiO₂ layer having a film thickness of 10 nm formed by electron beam evaporation. Table 1 shows the film thicknesses of the primer layer and the water-repellent surface layer.

### [Example 1]

A glass substrate having a water-repellent surface layer was obtained in the same manner as in Comparative Example 1 except that an aqueous primer composition 2 shown below was used. Table 1 shows the film thicknesses of the primer layer and the water-repellent surface layer.

### [Aqueous primer composition 2]

An aqueous primer composition 2 was obtained by uniformly mixing 10 g of water-dispersed silica nano-particles (SNOWTEX ST-XS, manufactured by Nissan Chemical Corporation), 10 g of zirconium ammonium carbonate aqueous solution (Bacote 20, manufactured by Nippon Light Metal Company, Ltd.), and 1980 g of pure water, as a pure water dispersion liquid of silica nano-particles having an average particle size of 7 nm and zirconium ammonium carbonate (silica nano-particle concentration: 0.1 wt%, concentration in terms of zirconium oxide: 0.1 wt%, pH: 9).

The concentration in terms of zirconium oxide was determined by a chelate titration method. That is, an excessive amount of ethylenediaminetetraacetic acid (EDTA) was added to the zirconium ammonium carbonate aqueous solution treated with perchloric acid and nitric acid, the mixture was heated to generate a zirconium-EDTA complex salt, the pH of the solution was adjusted to 5 to 6, and excessive EDTA was titrated using a lead standard solution to determine the zirconium oxide concentration (the same applies hereinafter).

### [Example 2]

A glass substrate having a water-repellent surface layer was obtained in the same manner as in Comparative Example 1 except that an aqueous primer composition 3 shown below was used. Table 1 shows the film thicknesses of the primer layer and the water-repellent surface layer.

### [Aqueous primer composition 3]

An aqueous primer composition 3 was obtained by uniformly mixing 10 g of water-dispersed silica nano-particles (SNOWTEX ST-XS, manufactured by Nissan Chemical Corporation), 32.3 g of niobium oxide nano-particles (BIRAL Nb-G6000, manufactured by Taki Chemical Co., Ltd.), and 1957.7 g of pure water, as a pure water dispersion liquid of silica nano-particles having an average particle size of 7 nm and niobium oxide nano-particles having an average particle size of 6 nm (silica nano-particle concentration: 0.1 wt%, niobium oxide nano-particle concentration: 0.1 wt%, pH: 9).

### [Example 3]

A glass substrate having a water-repellent surface layer was obtained in the same manner as in Comparative Example 1 except that an aqueous primer composition 4 shown below was used. Table 1 shows the film thicknesses of the primer layer and the water-repellent surface layer.

### [Aqueous primer composition 4]

An aqueous primer composition 4 was obtained by uniformly mixing 10 g of water-dispersed silica nano-particles (SNOWTEX ST-XS, manufactured by Nissan Chemical Corporation), 25 g of zirconium ammonium carbonate aqueous solution (Bacote 20, manufactured by Nippon Light Metal Company, Ltd.), and 1965 g of pure water, as a pure water dispersion liquid of silica nano-particles having an average particle size of 7 nm and zirconium ammonium carbonate (silica nano-particle concentration: 0.1 wt%, concentration in terms of zirconium oxide: 0.25 wt%, pH: 9).

### [Example 4]

A glass substrate having a water-repellent surface layer was obtained in the same manner as in Comparative Example 1 except that an aqueous primer composition 5 shown below was used. Table 1 shows the film thicknesses of the primer layer and the water-repellent surface layer.

### [Aqueous primer composition 5]

An aqueous primer composition 5 was obtained by uniformly mixing 10 g of water-dispersed silica nano-particles (SNOWTEX ST-XS, manufactured by Nissan Chemical Corporation), 50 g of zirconium ammonium carbonate aqueous solution (Bacote 20, manufactured by Nippon Light Metal Company, Ltd.), and 1940 g of pure water, as a pure water dispersion liquid of silica nano-particles having an average particle size of 7 nm and zirconium ammonium carbonate (silica nano-particle concentration: 0.1 wt%, concentration in terms of zirconium oxide: 0.5 wt%, pH: 9).

### [Comparative Example 3]

A glass substrate having a water-repellent surface layer was obtained in the same manner as in Comparative Example 1 except that an aqueous primer composition 6 shown below was used. Table 1 shows the film thicknesses of the primer layer and the water-repellent surface layer.

### [Aqueous primer composition 6]

An aqueous primer composition 6 was obtained by uniformly mixing 10 g of water-dispersed silica nano-particles (SNOWTEX ST-XS, manufactured by Nissan Chemical Corporation), 100 g of zirconium ammonium carbonate aqueous solution (Bacote 20, manufactured by Nippon Light Metal Company, Ltd.), and 1890 g of pure water, as a pure water dispersion liquid of silica nano-particles having an average particle size of 7 nm and zirconium ammonium carbonate (silica nano-particle concentration: 0.1 wt%, concentration in terms of zirconium oxide: 1.0 wt%, pH: 9).

For the glass substrate having a water-repellent surface layer obtained in each of the above Examples and Comparative Examples, the initial water contact angle, the steel wool abrasion durability, and the alkali resistance were evaluated by the following methods.

### [Measurement of initial water contact angle]

The water contact angle of the water-repellent surface layer of the glass substrate was measured by an analysis method of the sessile drop method (droplet volume: 2 µL) with θ/2 analysis in accordance with JIS R 3257:1999 using a contact angle meter Drop Master (manufactured by Kyowa Interface Science Co., Ltd.). Table 1 shows the measurement results.

### [Steel wool abrasion durability test]

The water-repellent surface layer of the glass substrate was tested using a reciprocal abrasion tester (Type 40, manufactured by Shinto Scientific Co., Ltd.) under the following conditions.

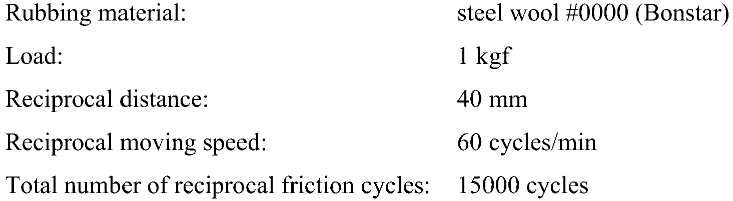

Every 2500 reciprocal friction cycles, the water contact angle of the frictionally abraded portion was measured in the same manner as described above. The steel wool abrasion durability cycle number was defined as the number of reciprocal friction cycles within which a water contact angle of 90° or more is maintained. In Comparative Example 1, the steel wool abrasion durability cycle number was 15000 cycles. In Table 1, the steel wool abrasion durability cycle number in Comparative Example 1 is converted to 100, and Table 1 shows the ratio of the steel wool abrasion durability cycle number in each of the Examples and Comparative Examples to that in Comparative Example 1, as the steel wool abrasion durability.

### [Alkali resistance test]

The glass substrate having a water-repellent surface layer was immersed in a 0.4 wt% sodium hydroxide aqueous solution (test liquid) at 55°C. Every 2 hours, the glass substrate was taken out from the test liquid, pure water was made to flow over the water-repellent surface layer of the glass substrate for 1 minute to remove the test liquid, and water on the surface was removed by blowing dry air. Then, the water contact angle of the water-repellent surface layer of the glass substrate was measured in the same manner as described above. The immersion in the test liquid was repeated until the water contact angle became less than 90°, and the alkali resistance time was defined as the immersion time within which a water contact angle of 90° was maintained. In Comparative Example 1, the alkali resistance time was 16 hours. In Table 1, the alkali resistance time in Comparative Example 1 is converted to 100, and Table 1 shows the ratio of the alkali resistance time in each of the Examples and Comparative Examples to that in Comparative Example 1, as the alkali resistance.

**[Table 1]**

| | Substrate | Primer layer | | Water-repellent surface layer | | Initial water contact angle (°) | Steel wool abrasion durability | Alkali resistance |
|---|---|---|---|---|---|---|---|---|
| | | Aqueous primer composition | Film thickness (nm) | Surface treating agent | Film thickness (nm) | | | |
| Comparative Example 1 | Soda lime glass | 1 | 4 | I | 10 | 113 | 100 | 100 |
| Comparative Example 2 | Soda lime glass | SiO₂ Vapor deposition film | 10 | I | 10 | 114 | 100 | 50 |
| Example 1 | Soda lime glass | 2 | 5 | I | 10 | 113 | 100 | 175 |
| Example 2 | Soda lime glass | 3 | 6 | I | 10 | 113 | 100 | 150 |
| Example 3 | Soda lime glass | 4 | 8 | I | 10 | 113 | 100 | 200 |
| Example 4 | Soda lime glass | 5 | 6 | I | 10 | 112 | 100 | 200 |
| Comparative Example 3 | Soda lime glass | 6 | 10 | I | 10 | 113 | 17 | 250 |

### [Comparative Example 4]

### [Alkaline cleaning of stainless steel substrate]

A stainless steel substrate (SUS304 treated by bright annealing (BA), size: 100 mm × 50 mm × 1.0 mm thick) was dipped in an alkaline cleaning liquid (aqueous solution of Semi-Clean L.G.L by Yokohama Oils & Fats Industry Co., Ltd., diluted to 5 wt%) and was ultrasonically cleaned for 5 minutes. Then the stainless steel substrate was dipped in ion exchanged water and was ultrasonically cleaned for 6 minutes. The stainless steel substrate was dried by ejecting compressed air to blow off water.

### [Plasma cleaning of stainless steel substrate]

The surface of the stainless steel substrate after the alkaline cleaning was treated with an oxygen/argon mixture plasma. The treatment conditions are shown below.

| | |
|---|---|
| Treatment device: | PDC510 (Yamato Scientific Co., Ltd.) |
| Oxygen gas flow rate: | 10 sccm (standard cubic centimeters) |
| Argon gas flow rate: | 100 sccm |
| Treating pressure: | 60 Pa |
| RF supply power: | 250 W |
| Treating time: | 30 seconds |

### [Formation of primer layer]

A stainless steel substrate after the alkaline cleaning and the plasma cleaning was dip-coated with the aqueous primer composition 1 and then was dried by heating to form a primer layer having a film thickness of 4 nm. The dip-coating and heating conditions are the same as those in Comparative Example 1.

The film thickness of the primer layer was measured by X-ray reflectometry.

### [Formation of water-repellent surface layer by physical vapor deposition (PVD)]

The primer layer-bearing stainless steel substrate was set in a vacuum evaporation system of resistance heating type (VTR-350M by ULVAC KIKO, Inc.). The same treatment as in Comparative Example 1 was performed using the surface treating agent I to obtain a stainless steel substrate to which the surface treating agent I was applied.

The stainless steel substrate to which the surface treating agent I was applied was allowed to stand in an environment of 25°C and a relative humidity of 50% for 24 hours to cure and fix the surface treating agent I, and thus a stainless steel substrate having a water-repellent surface layer of a fluoropolyether group-containing polymer having a film thickness of 4 nm was obtained.

The film thickness of the water-repellent surface layer was computed by quantitatively measuring the strength of X-ray fluorescence attributable to a fluorine element using an X-ray fluorescence spectrometer (Rigaku Corporation, tradename: X-ray fluorescence spectrometer Primini), and plotting on the calibration line.

### [Comparative Example 5]

A stainless steel substrate having a water-repellent surface layer was obtained in the same manner as in Comparative Example 4 except that the primer layer was changed to a SiO₂ layer having a film thickness of 10 nm formed by electron beam evaporation. Table 2 shows the film thicknesses of the primer layer and the water-repellent surface layer.

### [Example 5]

A stainless steel substrate having a water-repellent surface layer was obtained in the same manner as in Comparative Example 4 except that the aqueous primer composition 2 was used. Table 2 shows the film thicknesses of the primer layer and the water-repellent surface layer.

### [Example 6]

A stainless steel substrate having a water-repellent surface layer was obtained in the same manner as in Comparative Example 4 except that the aqueous primer composition 3 was used. Table 2 shows the film thicknesses of the primer layer and the water-repellent surface layer.

### [Example 7]

A stainless steel substrate having a water-repellent surface layer was obtained in the same manner as in Comparative Example 4 except that the aqueous primer composition 7 described below was used. Table 2 shows the film thicknesses of the primer layer and the water-repellent surface layer.

### [Aqueous primer composition 7]

An aqueous primer composition 7 was obtained by uniformly mixing 10 g of water-dispersed silica nano-particles (SNOWTEX ST-XS, manufactured by Nissan Chemical Corporation), 75 g of zirconium ammonium carbonate aqueous solution (Bacote 20, manufactured by Nippon Light Metal Company, Ltd.), and 1915 g of pure water, as a pure water dispersion liquid of silica nano-particles having an average particle size of 7 nm and zirconium ammonium carbonate (silica nano-particle concentration: 0.1 wt%, concentration in terms of zirconium oxide: 0.75 wt%, pH: 9).

### [Comparative Example 6]

A stainless steel substrate having a water-repellent surface layer was obtained in the same manner as in Comparative Example 4 except that the aqueous primer composition 6 was used. Table 2 shows the film thicknesses of the primer layer and the water-repellent surface layer.

For the stainless steel substrate having a water-repellent surface layer obtained in each of the above Examples and Comparative Examples, the initial water contact angle, the non-woven fabric abrasion durability, and the alkali resistance were evaluated by the following methods.

### [Measurement of initial water contact angle]

The water contact angle of the water-repellent surface layer of the stainless steel substrate was measured by an analysis method of the sessile drop method (droplet volume: 2 µL) with θ/2 analysis in accordance with JIS R 3257:1999 using a contact angle meter Drop Master (manufactured by Kyowa Interface Science Co., Ltd.). Table 2 shows the measurement results.

### [Non-woven fabric abrasion durability test]

The water-repellent surface layer of the stainless steel substrate was tested using a reciprocal abrasion tester (Type 40, manufactured by Shinto Scientific Co., Ltd.) under the following conditions.

| | |
|---|---|
| Rubbing material: | Bemcot (M-3II, manufactured by Ozu Corporation) |
| Load: | 1 kgf |
| Reciprocal distance: | 40 mm |
| Reciprocal moving speed: | 40 cycles/min |
| Total number of reciprocal friction cycles: | 10000 cycles |

Every 2500 reciprocal friction cycles, the water contact angle of the frictionally abraded portion was measured in the same manner as described above. The non-woven fabric abrasion durability cycle number was defined as the number of reciprocal friction cycles within which a water contact angle of 90° or more is maintained. In Comparative Example 4, the non-woven fabric abrasion durability cycle number was 10000 cycles. In Table 2, the non-woven fabric abrasion durability cycle number in Comparative Example 4 is converted to 100, and Table 2 shows the ratio of the non-woven fabric abrasion durability cycle number in each of the Examples and Comparative Examples to that in Comparative Example 4, as the non-woven fabric abrasion durability.

### [Alkali resistance test]

The stainless steel substrate having a water-repellent surface layer was immersed in a 0.4 wt% sodium hydroxide aqueous solution (test liquid) at 55°C. Every 2 hours, the stainless steel substrate was taken out from the test liquid, pure water was made to flow over the water-repellent surface layer of the stainless steel substrate for 1 minute to remove the test liquid, and water on the surface was removed by blowing dry air. Then, the water contact angle of the water-repellent surface layer of the stainless steel substrate was measured in the same manner as described above. The immersion in the test liquid was repeated until the water contact angle became less than 90°, and the alkali resistance time was defined as the immersion time within which a water contact angle of 90° was maintained. In Comparative Example 4, the alkali resistance time was 8 hours. In Table 2, the alkali resistance time in Comparative Example 4 is converted to 100, and Table 2 shows the ratio of the alkali resistance time in each of the Examples and Comparative Examples to that in Comparative Example 4, as the alkali resistance.

**[Table 2]**

| | Substrate | Primer layer | | Water-repellent surface layer | | Initial water contact angle (°) | Non-woven fabric abrasion durability | Alkali resistance |
|---|---|---|---|---|---|---|---|---|
| | | Aqueous primer composition | Film thickness (nm) | Surface treating agent | Film thickness (nm) | | | |
| Comparative Example 4 | SUS | 1 | 4 | I | 10 | 113 | 100 | 100 |
| Comparative Example 5 | SUS | SiO₂ Vapor deposition film | 10 | I | 10 | 113 | 100 | 50 |
| Example 5 | SUS | 2 | 5 | I | 10 | 113 | 100 | 200 |
| Example 6 | SUS | 3 | 6 | I | 10 | 112 | 100 | 150 |
| Example 7 | SUS | 7 | 8 | I | 10 | 113 | 100 | 300 |
| Comparative Example 6 | SUS | 6 | 10 | I | 10 | 112 | 25 | 350 |

Comparing the results of Comparative Example 1 and Examples 1 to 4 reveals that Examples 1 to 4 provided excellent chemical resistance and good steel wool abrasion durability.

Meanwhile, comparing the results of Comparative Example 4 and Examples 5 to 7 reveals that all of Examples 5 to 7 provided a water-repellent surface layer excellent in chemical resistance and also excellent in non-woven fabric abrasion durability.

In Comparative Examples 2 and 5 in which the primer layer was a SiO₂ layer, the chemical resistance was worse than in corresponding Examples and other Comparative Examples.

In Comparative Examples 3 and 6 in which the primer composition 6 was used, the percent of the metal compound relative to the silica nano-particles was 1000%, and thus the chemical resistance was more excellent than in Comparative Examples 1 and 4, but good abrasion durability was not obtained against both the steel wool and the non-woven fabric.

### [Comparative Example 7]

### [Alkaline cleaning of glass substrate]

A soda lime glass substrate (size: 100 mm × 50 mm × 0.7 mm thick) was dipped in an alkaline cleaning liquid (aqueous solution of Semi-Clean L.G.L by Yokohama Oils & Fats Industry Co., Ltd., diluted to 5 wt%) and was ultrasonically cleaned for 5 minutes. Then the glass substrate was dipped in ion exchanged water and was ultrasonically cleaned for 6 minutes. The glass substrate was dried by ejecting compressed air to blow off water.

### [Plasma cleaning of glass substrate]

The surface of the glass substrate after the alkaline cleaning was treated with an oxygen/argon mixture plasma. The treatment conditions are shown below.

| | |
|---|---|
| Treatment device: | PDC510 (Yamato Scientific Co., Ltd.) |
| Oxygen gas flow rate: | 10 sccm (standard cubic centimeters) |
| Argon gas flow rate: | 100 sccm |
| Treating pressure: | 60 Pa |
| RF supply power: | 250 W |
| Treating time: | 30 seconds |

### [Formation of primer layer]

A glass substrate after the alkaline cleaning and the plasma cleaning was dip-coated with the aqueous primer composition 1 and then was dried by heating to form a primer layer having a film thickness of 4 nm. The dip-coating and heating conditions are shown below.

| | |
|---|---|
| Dipping time: | 30 seconds |
| Pull-up speed: | 0.5 mm/sec |
| Heating conditions: | 150°C, 30 minutes |

The film thickness of the primer layer was measured by X-ray reflectometry.

### [Preparation of surface treating agent II]

In a reaction vessel, 1.00 g (1.82 × 10⁻³ mol) of a compound having the following formula (b):

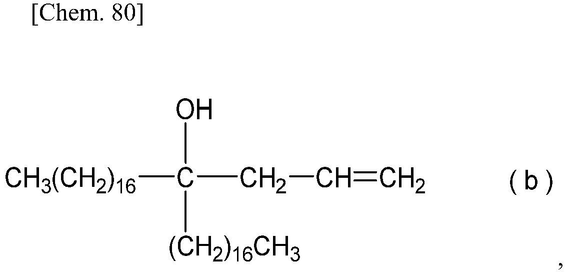

1.00 g of toluene, 0.667 g (5.46×10⁻³ mol) of trimethoxysilane, and 6.62×10⁻³ g of a toluene solution of chloroplatinic acid/vinylsiloxane complex (containing 2.05×10⁻⁸ mol of elemental Pt) were mixed, and the mixture was aged at 80°C for 24 hours. Then, the solvent and the unreacted material were distilled off under reduced pressure to obtain a compound.

The obtained compound was confirmed to have a structure having the following formula (B) by ¹H-NMR.

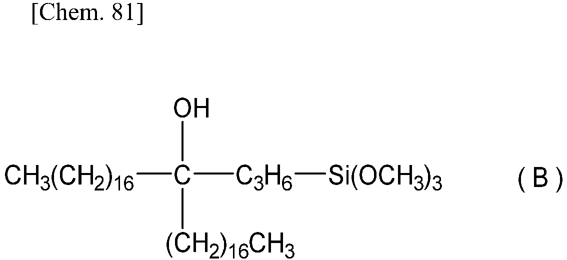

A surface treating agent II was obtained by dissolving the compound having the formula (B) in propylene glycol monomethyl ether (PGME) to a concentration of 20 wt%.

### [Formation of water-repellent surface layer by physical vapor deposition (PVD)]

The primer layer-bearing glass substrate was set in a vacuum evaporation system of resistance heating type (VTR-350M by ULVAC KIKO, Inc.). A droplet (3 µL) of the surface treating agent II was placed in the resistance heater chamber, and the chamber was evacuated. When the chamber was evacuated to or below an internal pressure of 3×10⁻³ Pa, resistance heating was started. The power fed for resistance heating was adjusted so that the maximum evaporation rate measured by a quartz oscillator film thickness meter being placed about 20 cm apart from the resistance heater chamber was 1.0 nm/sec. After the evaporation rate measured by the quartz oscillator film thickness meter decreased to 0.1 nm/sec, resistance heating was continued for a further 100 seconds. After a standby time of 5 minutes for cooling, the chamber was opened to air to obtain a glass substrate to which the surface treating agent II was applied.

The glass substrate to which the surface treating agent II was applied was allowed to stand in an environment of 80°C and a relative humidity of 80% for 4 hours to cure and fix the surface treating agent II, and thus a glass substrate having a 4 nm-thick water-repellent surface layer of an alkyl group-containing compound being free of fluorine.

The film thickness of the water-repellent surface layer was computed using a spectroscopic ellipsometer (J. A. Woolam, tradename: M-2000D).

### [Comparative Example 8]

A glass substrate having a water-repellent surface layer was obtained in the same manner as in Comparative Example 7 except that the primer layer was changed to a SiO₂ layer having a film thickness of 10 nm formed by electron beam evaporation. Table 3 shows the film thicknesses of the primer layer and the water-repellent surface layer.

### [Example 8]

A glass substrate having a water-repellent surface layer was obtained in the same manner as in Comparative Example 7 except that the aqueous primer composition 2 was used. Table 3 shows the film thicknesses of the primer layer and the water-repellent surface layer.

### [Example 9]

A glass substrate having a water-repellent surface layer was obtained in the same manner as in Comparative Example 7 except that the aqueous primer composition 3 was used. Table 3 shows the film thicknesses of the primer layer and the water-repellent surface layer.

### [Example 10]

A glass substrate having a water-repellent surface layer was obtained in the same manner as in Comparative Example 7 except that the aqueous primer composition 7 was used. Table 3 shows the film thicknesses of the primer layer and the water-repellent surface layer.

### [Comparative Example 9]

A glass substrate having a water-repellent surface layer was obtained in the same manner as in Comparative Example 7 except that the aqueous primer composition 6 was used. Table 3 shows the film thicknesses of the primer layer and the water-repellent surface layer.

For the glass substrate having a water-repellent surface layer obtained in each of the above Examples and Comparative Examples, the initial water contact angle, the steel wool abrasion durability, and the alkali resistance were evaluated by the following methods.

### [Measurement of initial water contact angle]

The water contact angle of the water-repellent surface layer of the glass substrate was measured by an analysis method of the sessile drop method (droplet volume: 2 µL) with θ/2 analysis in accordance with JIS R 3257:1999 using a contact angle meter Drop Master (manufactured by Kyowa Interface Science Co., Ltd.). Table 3 shows the measurement results.

### [Steel wool abrasion durability test]

The water-repellent surface layer of the glass substrate was tested using a reciprocal abrasion tester (Type 40, manufactured by Shinto Scientific Co., Ltd.) under the following conditions.

| | |
|---|---|
| Rubbing material: | steel wool #0000 (Bonstar) |
| Load: | 0.5 kgf |
| Reciprocal distance: | 40 mm |
| Reciprocal moving speed: | 60 cycles/min |
| Total number of reciprocal friction cycles: | 4000 cycles |

Every 500 reciprocal friction cycles, the water contact angle of the frictionally abraded portion was measured in the same manner as described above. The steel wool abrasion durability cycle number was defined as the number of reciprocal friction cycles within which a water contact angle of 90° or more is maintained. In Comparative Example 7, the steel wool abrasion durability cycle number was 4000 cycles. In Table 3, the steel wool abrasion durability cycle number in Comparative Example 7 is converted to 100, and Table 3 shows the ratio of the steel wool abrasion durability cycle number in each of the Examples and Comparative Examples to that in Comparative Example 7, as the steel wool abrasion durability.

### [Alkali resistance test]

The glass substrate having a water-repellent surface layer was immersed in a 0.4 wt% sodium hydroxide aqueous solution (test liquid) at 55°C. Every 2 hours, the glass substrate was taken out from the test liquid, pure water was made to flow over the water-repellent surface layer of the glass substrate for 1 minute to remove the test liquid, and water on the surface was removed by blowing dry air. Then, the water contact angle of the water-repellent surface layer of the glass substrate was measured in the same manner as described above. The immersion in the test liquid was repeated until the water contact angle became less than 90°, and the alkali resistance time was defined as the immersion time within which a water contact angle of 90° was maintained. In Comparative Example 7, the alkali resistance time was 8 hours. In Table 3, the alkali resistance time in Comparative Example 7 is converted to 100, and Table 3 shows the ratio of the alkali resistance time in each of the Examples and Comparative Examples to that in Comparative Example 7, as the alkali resistance.

**[Table 3]**

| | Substrate | Primer layer | | Water-repellent surface layer | | Initial water contact angle (°) | Steel wool abrasion durability | Alkali resistance |
|---|---|---|---|---|---|---|---|---|
| | | Aqueous primer composition | Film thickness (nm) | Surface treating agent | Film thickness (nm) | | | |
| Comparative Example 7 | Soda lime glass | 1 | 4 | II | 4 | 104 | 100 | 100 |
| Comparative Example 8 | Soda lime glass | SiO₂ Vapor deposition film | 10 | II | 4 | 103 | 100 | 50 |
| Example 8 | Soda lime glass | 2 | 5 | II | 4 | 103 | 100 | 150 |
| Example 9 | Soda lime glass | 3 | 6 | II | 4 | 104 | 100 | 150 |
| Example 10 | Soda lime glass | 7 | 8 | II | 4 | 103 | 100 | 150 |
| Comparative Example 9 | Soda lime glass | 6 | 10 | II | 4 | 103 | 25 | 200 |

### [Comparative Example 10]

### [Alkaline cleaning of stainless steel substrate]

A stainless steel substrate (SUS304 treated by bright annealing (BA), size: 100 mm × 50 mm × 1.0 mm thick) was dipped in an alkaline cleaning liquid (aqueous solution of Semi-Clean L.G.L by Yokohama Oils & Fats Industry Co., Ltd., diluted to 5 wt%) and was ultrasonically cleaned for 5 minutes. Then the stainless steel substrate was dipped in ion exchanged water and was ultrasonically cleaned for 6 minutes. The stainless steel substrate was dried by ejecting compressed air to blow off water.

### [Plasma cleaning of stainless steel substrate]

The surface of the stainless steel substrate after the alkaline cleaning was treated with an oxygen/argon mixture plasma. The treatment conditions are shown below.

| | |
|---|---|
| Treatment device: | PDC510 (Yamato Scientific Co., Ltd.) |
| Oxygen gas flow rate: | 10 sccm (standard cubic centimeters) |
| Argon gas flow rate: | 100 sccm |
| Treating pressure: | 60 Pa |
| RF supply power: | 250 W |
| Treating time: | 30 seconds |

### [Formation of primer layer]

A stainless steel substrate after the alkaline cleaning and the plasma cleaning was dip-coated with the aqueous primer composition 1 and then was dried by heating to form a primer layer having a film thickness of 4 nm. The dip-coating and heating conditions are the same as those in Comparative Example 1.

The film thickness of the primer layer was measured by X-ray reflectometry.

### [Formation of water-repellent surface layer by physical vapor deposition (PVD)]

The primer layer-bearing stainless steel substrate was set in a vacuum evaporation system of resistance heating type (VTR-350M by ULVAC KIKO, Inc.). The same treatment as in Comparative Example 7 was performed using the surface treating agent II to obtain a stainless steel substrate to which the surface treating agent II was applied.

The stainless steel substrate to which the surface treating agent II was applied was allowed to stand in an environment of 80°C and a relative humidity of 80% for 4 hours to cure and fix the surface treating agent II, and thus a stainless steel substrate having a 4 nm-thick water-repellent surface layer of an alkyl group-containing compound being free of fluorine.

The film thickness of the water-repellent surface layer was computed using a spectroscopic ellipsometer (J.A.Woolam, tradename: M-2000D).

### [Comparative Example 11]

A stainless steel substrate having a water-repellent surface layer was obtained in the same manner as in Comparative Example 10 except that the primer layer was changed to a SiO₂ layer having a film thickness of 10 nm formed by electron beam evaporation. Table 4 shows the film thicknesses of the primer layer and the water-repellent surface layer.

### [Example 11]

A stainless steel substrate having a water-repellent surface layer was obtained in the same manner as in Comparative Example 10 except that the aqueous primer composition 2 was used. Table 4 shows the film thicknesses of the primer layer and the water-repellent surface layer.

### [Example 12]

A stainless steel substrate having a water-repellent surface layer was obtained in the same manner as in Comparative Example 10 except that the aqueous primer composition 3 was used. Table 4 shows the film thicknesses of the primer layer and the water-repellent surface layer.

### [Example 13]

A stainless steel substrate having a water-repellent surface layer was obtained in the same manner as in Comparative Example 10 except that the aqueous primer composition 7 was used. Table 4 shows the film thicknesses of the primer layer and the water-repellent surface layer.

### [Comparative Example 12]

A stainless steel substrate having a water-repellent surface layer was obtained in the same manner as in Comparative Example 10 except that the aqueous primer composition 6 was used. Table 4 shows the film thicknesses of the primer layer and the water-repellent surface layer.

For the stainless steel substrate having a water-repellent surface layer obtained in each of the above Examples and Comparative Examples, the initial water contact angle, the non-woven fabric abrasion durability, and the alkali resistance were evaluated by the following methods.

### [Measurement of initial water contact angle]

The water contact angle of the water-repellent surface layer of the stainless steel substrate was measured by an analysis method of the sessile drop method (droplet volume: 2 µL) with θ/2 analysis in accordance with JIS R 3257:1999 using a contact angle meter Drop Master (manufactured by Kyowa Interface Science Co., Ltd.). Table 4 shows the measurement results.

### [Non-woven fabric abrasion durability test]

The water-repellent surface layer of the stainless steel substrate was tested using a reciprocal abrasion tester (Type 40, manufactured by Shinto Scientific Co., Ltd.) under the following conditions.

| | |
|---|---|
| Rubbing material: | Bemcot (M-3II, manufactured by Ozu Corporation) |
| Load: | 1 kgf |
| Reciprocal distance: | 40 mm |
| Reciprocal moving speed: | 40 cycles/min |
| Total number of reciprocal friction cycles: | 10000 cycles |

Every 2500 reciprocal friction cycles, the water contact angle of the frictionally abraded portion was measured in the same manner as described above. The non-woven fabric abrasion durability cycle number was defined as the number of reciprocal friction cycles within which a water contact angle of 90° or more is maintained. In Comparative Example 10, the non-woven fabric abrasion durability cycle number was 10000 cycles. In Table 4, the non-woven fabric abrasion durability cycle number in Comparative Example 10 is converted to 100, and Table 4 shows the ratio of the non-woven fabric abrasion durability cycle number in each of the Examples and Comparative Examples to that in Comparative Example 10, as the non-woven fabric abrasion durability.

### [Alkali resistance test]

The stainless steel substrate having a water-repellent surface layer was immersed in a 0.4 wt% sodium hydroxide aqueous solution (test liquid) at 55°C. Every 2 hours, the stainless steel substrate was taken out from the test liquid, pure water was made to flow over the water-repellent surface layer of the stainless steel substrate for 1 minute to remove the test liquid, and water on the surface was removed by blowing dry air. Then, the water contact angle of the water-repellent surface layer of the stainless steel substrate was measured in the same manner as described above. The immersion in the test liquid was repeated until the water contact angle became less than 90°, and the alkali resistance time was defined as the immersion time within which a water contact angle of 90° was maintained. In Comparative Example 10, the alkali resistance time was 4 hours. In Table 4, the alkali resistance time in Comparative Example 10 is converted to 100, and Table 4 shows the ratio of the alkali resistance time in each of the Examples and Comparative Examples to that in Comparative Example 10, as the alkali resistance.

**[Table 4]**

| | Substrate | Primer layer | | Water-repellent surface layer | | Initial water contact angle (°) | Non-woven fabric abrasion durability | Alkali resistance |
|---|---|---|---|---|---|---|---|---|
| | | Aqueous primer composition | Film thickness (nm) | Surface treating agent | Film thickness (nm) | | | |
| Comparative Example 10 | SUS | 1 | 4 | II | 4 | 102 | 100 | 100 |
| Comparative Example 11 | SUS | SiO₂ Vapor deposition film | 10 | II | 4 | 102 | 100 | 50 |
| Example 11 | SUS | 2 | 5 | II | 4 | 103 | 100 | 200 |
| Example 12 | SUS | 3 | 6 | II | 4 | 103 | 100 | 200 |
| Example 13 | SUS | 7 | 8 | II | 4 | 103 | 100 | 200 |
| Comparative Example 12 | SUS | 6 | 10 | II | 4 | 103 | 25 | 300 |

Comparing the results of Comparative Example 7 and Examples 8 to 10 reveals that all of Examples 8 to 10 provided excellent chemical resistance and good steel wool abrasion durability.

Comparing the results of Comparative Example 10 and Examples 11 to 13 reveals that all of Examples 11 to 13 provided a water-repellent surface layer excellent in chemical resistance and also excellent in non-woven fabric abrasion durability.

In Comparative Examples 8 and 11 in which the primer layer was a SiO₂ layer, the chemical resistance was worse than in corresponding Examples and other Comparative Examples.

In Comparative Examples 9 and 12 in which the primer composition 6 was used, the percent of the metal compound relative to the silica nano-particles was 1000%, and thus the chemical resistance was more excellent than in Comparative Examples 7 and 10, but good abrasion durability was not obtained against both the steel wool and the non-woven fabric.

### [Comparative Example 13]

### [Alkaline cleaning of glass substrate]

A soda lime glass substrate (size: 100 mm × 50 mm × 0.7 mm thick) was dipped in an alkaline cleaning liquid (aqueous solution of Semi-Clean L.G.L by Yokohama Oils & Fats Industry Co., Ltd., diluted to 5 wt%) and was ultrasonically cleaned for 5 minutes. Then the glass substrate was dipped in ion exchanged water and was ultrasonically cleaned for 6 minutes. The glass substrate was dried by ejecting compressed air to blow off water.

### [Plasma cleaning of glass substrate]

The surface of the glass substrate after the alkaline cleaning was treated with an oxygen/argon mixture plasma. The treatment conditions are shown below.

| | |
|---|---|
| Treatment device: | PDC510 (Yamato Scientific Co., Ltd.) |
| Oxygen gas flow rate: | 10 sccm (standard cubic centimeters) |
| Argon gas flow rate: | 100 sccm |
| Treating pressure: | 60 Pa |
| RF supply power: | 250 W |
| Treating time: | 30 seconds |

### [Formation of primer layer]

A glass substrate after the alkaline cleaning and the plasma cleaning was dip-coated with the aqueous primer composition 1 and then was dried by heating to form a primer layer having a film thickness of 4 nm. The dip-coating and heating conditions are shown below.

| | |
|---|---|
| Dipping time: | 30 seconds |
| Pull-up speed: | 0.5 mm/sec |
| Heating conditions: | 150°C, 30 minutes |

The film thickness of the primer layer was measured by X-ray reflectometry.

### [Preparation of surface treating agent III]

A surface treating agent III was obtained by dissolving the compound (A) (numerical average molecular weight: 4000) in a fluorinated solvent (NOVEC HFE-7200 by 3M, ethyl perfluorobutyl ether) to a concentration of 0.1 wt%.

### [Formation of water-repellent surface layer by dip coating]

The glass substrate on which the primer layer was formed was dip-coated with the surface treating agent III, and the applied surface treating agent III was cured to obtain a glass substrate having a water-repellent surface layer of a fluoropolyether group-containing polymer having a film thickness of 10 nm. The dip-coating and curing conditions are shown below.

| | |
|---|---|
| Dipping time: | 30 seconds |
| Pull-up speed: | 10 mm/sec |
| Curing conditions: | 80°C, relative humidity 80%, 30 minutes |

The film thickness of the water-repellent surface layer was computed by quantitatively measuring the strength of X-ray fluorescence attributable to a fluorine element using an X-ray fluorescence spectrometer (Rigaku Corporation, tradename: X-ray fluorescence spectrometer Primini), and plotting on the calibration line.

The obtained glass substrate having a water-repellent surface layer was evaluated in the same manner as in Comparative Example 1. As a result, the initial water contact angle was 113°, the steel wool abrasion durability cycle number was 15000 cycles, and the alkali resistance time was 16 hours.

### [Example 14]

A glass substrate having a water-repellent surface layer was obtained in the same manner as in Comparative Example 13 except that the aqueous primer composition 2 was used. The film thicknesses were measured in the same manner as in Comparative Example 13. As a result, the film thickness of the primer layer was 5 nm, and the film thickness of the water-repellent surface layer was 10 nm.

The obtained glass substrate having a water-repellent surface layer was evaluated in the same manner as in Comparative Example 1. As a result, the initial water contact angle was 113°, the steel wool abrasion durability cycle number was 15000 cycles, and the alkali resistance time was 28 hours.

The steel wool abrasion durability was at the same level as in Comparative Examples 1 and 13, and the alkali resistance was better than in Comparative Examples 1 and 13.

## Claims

1. An aqueous primer composition to be used for forming a primer layer of a water-repellent article, the water-repellent article including the primer layer on an outer surface of a substrate and further including a water-repellent surface layer on an outer surface of the primer layer, the aqueous primer composition comprising silica nano-particles and a metal compound containing at least one of niobium, hafnium, zirconium, and tantalum, wherein the metal compound is present at a weight percent of 5% or more and less than 1000% relative to the silica nano-particles.

2. The aqueous primer composition of claim 1, wherein the silica nano-particles have an average particle size of 0.1 to 50 nm.

3. The aqueous primer composition of claim 1, wherein the metal compound is at least one of niobium oxide, niobium ammonium oxalate, and niobium oxalate.

4. The aqueous primer composition of claim 3, wherein the niobium oxide consists of niobium oxide nano-particles having an average particle size of 0.1 to 20 nm.

5. The aqueous primer composition of claim 1, wherein the metal compound is at least one of zirconium ammonium carbonate, zirconium acetate, zirconium oxynitrate, zirconium nitrate, zirconium oxychloride, and chlorohydroxyzirconium.

6. The aqueous primer composition of claim 1, wherein the substrate is of metal.

7. The aqueous primer composition of claim 1, wherein the substrate is of glass.

8. The aqueous primer composition of claim 1, which is used for a building material or housing equipment.

9. The aqueous primer composition of claim 1, which is used for a touch panel, a window, or a lens.

10. A water-repellent article comprising:
a substrate;
a primer layer on an outer surface of the substrate, the primer layer containing 50 wt% or more of a total of silica nano-particles and a metal oxide containing at least one of niobium, hafnium, zirconium, and tantalum, the metal oxide present at a weight percent of 5% or more and less than 1000% relative to the silica nano-particles, the primer layer having a film thickness of 1 to 50 nm; and
a water-repellent surface layer on an outer surface of the primer layer, the water-repellent surface layer having a film thickness of 0.5 to 20 nm.

11. The water-repellent article of claim 10, wherein the silica nano-particles in the primer layer have an average particle size of 0.1 to 50 nm.

12. The water-repellent article of claim 10, wherein the metal oxide in the primer layer is niobium oxide or zirconium oxide.

13. The water-repellent article of claim 10, wherein the water-repellent surface layer is a cured product of a surface treating agent containing at least one fluoropolyether group-containing polymer having a silanol group or a hydrolyzable silyl group and/or a partial (hydrolytic) condensate thereof, the at least one fluoropolyether group-containing polymer having the following formula (1), (4), or (7):
[Chem. 1] A¹-Rf-D (1)
wherein Rf is a divalent perfluoropolyether group, A¹ is a monovalent fluorinated hydrocarbon group which is terminated with CF₃- or CF₂H- and may contain oxygen or A¹ is D, D is independently a monovalent group having the following formula (2):
[Chem. 2] -Q-Z(W)_{α} (2)
wherein Q is a single bond or a divalent organic group, Z is a tri to octa-valent group, α is an integer of 2 to 7, W is independently a monovalent silanol group or hydrolyzable silyl group-containing group having the following formula (3): 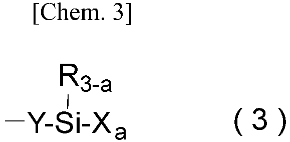
wherein R is a C₁-C₄ alkyl group or a phenyl group, X is independently a hydroxyl group or a hydrolyzable group, a is 2 or 3, Y is a single bond or a divalent hydrocarbon group which may contain at least one moiety selected from fluorine, silicon, and a siloxane bond,
[Chem. 4] A²-Rf-G (4)
wherein Rf is as defined above, A² is a monovalent fluorinated hydrocarbon group which is terminated with CF₃- or CF₂H- and may contain oxygen, or G, G is independently a monovalent group having the following formula (5): 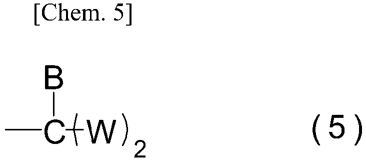
wherein W is as defined above, B is hydrogen or -OS, S is hydrogen, a C₁-C₁₀ monovalent hydrocarbon group, or a monovalent group having the following formula (6): 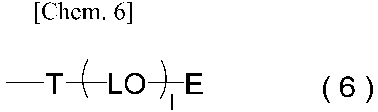
wherein T is a single bond or a divalent group, L is independently a C₁-C₄ divalent hydrocarbon group, E is a C₁-C₆ monovalent hydrocarbon group or W, l is an integer of 0 to 20,
[Chem. 7] A³-Rf-J (7)
wherein Rf is as defined above, A³ is a monovalent fluorinated hydrocarbon group which is terminated with CF₃- or CF₂H- and may contain oxygen, or J, J is independently a monovalent group having the following formula (8): 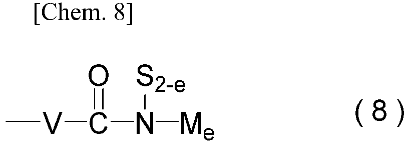
wherein S is as defined above, V is a single bond or a C₂-C₁₅ divalent hydrocarbon group which may contain an ether bond, M is independently a monovalent group having the following formula (9): 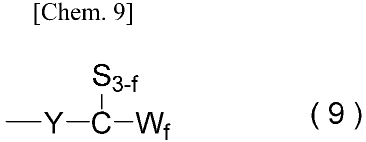
wherein Y, S, and W are as defined above, and f is an integer of 1 to 3,
e is 1 or 2, J containing at least two W.

14. The water-repellent article of claim 10, wherein the water-repellent surface layer is a cured product of a surface treating agent containing an alkyl group-containing compound having a hydrolyzable silyl group and being free of fluorine and/or a partial hydrolytic condensate thereof, the alkyl group-containing compound having the following formula (11), (12), or (13): 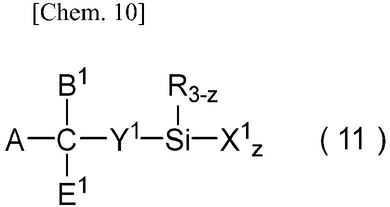
wherein A is a C₁-C₅₀ monovalent hydrocarbon group, B¹ is hydrogen or a hydroxyl group, E¹ is hydrogen or a C₁-C₅₀ monovalent hydrocarbon group, A and E¹ contain 12 or more carbon atoms in total, Y¹ is a single bond or a divalent hydrocarbon group which may contain at least one moiety selected from silicon and a siloxane bond, R is a C₁-C₄ alkyl group or a phenyl group, X¹ is independently a hydrolyzable group, and z is 2 or 3, 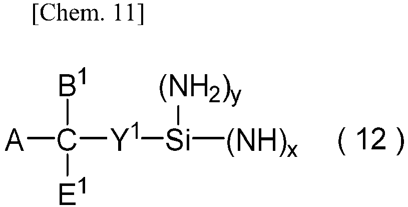
wherein A, B¹, E¹, Y¹ are as defined above, y is a number of 0 to 3, x represents (3 - y)/2, the formula (12) is a molecular formula of a monomer in a case where y is 3, the formula (12) is a composition formula of a polymer in a case where y is less than 3, 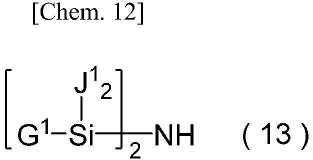
wherein G¹ is independently a C₈-C₃₀ monovalent hydrocarbon group, and J¹ is independently hydrogen, a hydroxyl group, or a methyl group.

15. The water-repellent article of claim 10, wherein the substrate is of metal.

16. The water-repellent article of claim 10, wherein the substrate is of glass.

17. The water-repellent article of claim 10, which is used for a building material or housing equipment.

18. The water-repellent article of claim 10, which is used for a touch panel, a window, or a lens.

19. A method of producing the water-repellent article of claim 10, the method comprising:
forming a primer layer by a wet coating method using the aqueous primer composition of any one of claims 1 to 9; and
forming a water-repellent surface layer by a wet coating method.

20. A method of producing the water-repellent article of claim 10, the method comprising:
forming a primer layer by a wet coating method using the aqueous primer composition of any one of claims 1 to 9; and
forming a water-repellent surface layer by a dry coating method.
